# EUROPEAN PATENT SPECIFICATION

(11) **EP 3 466 147 B1**
(45) Date of publication and mention of the grant of the patent: **19.07.2023**
(21) Application number: 17810675.3
(22) Date of filing: 20.04.2017
(51) Int. Cl.: H04W 74/08, H04B 17/15, H04W 24/10, H04W 72/0446, H04W 24/04, H04W 24/06

(54) **DEVICES AND METHODS FOR BAND PAUSE TESTING**
VORRICHTUNGEN UND VERFAHREN FÜR BANDPAUSENPRÜFUNG
DISPOSITIFS ET PROCÉDÉS DE TEST PENDANT UNE PAUSE DANS UNE BANDE

(30) Priority: 06.06.2016 US 201662346159 P
(43) Date of publication of application: 10.04.2019
(73) Proprietor: Apple Inc., Cupertino, CA 95014 (US)
(72) Inventor: BADIC, Biljana, 81825 München (DE); MUECK, Markus Dominik, 82008 Unterhaching (DE); JECHOUX, Bruno, 06600 Antibes (FR); NIU, Huaning, Milpitas, California 95035 (US); YANG, Chunyuan, 85570 Markt Schwaben (DE)
(74) Representative: Lang, Johannes
(86) International application number: PCT/US2017/028542
(87) International publication number: WO 2017/213759

(56) References cited:
- WO-A1-2016/035943
- US-A1- 2012 270 595
- US-A1- 2015 043 478
- US-A1- 2015 043 478
- US-A1- 2015 110 012
- QUALCOMM INCORPORATED: "Control details for UL in LAA", 3GPP DRAFT; R1-160885 CONTROL DETAILS FOR UL TRANSMISSION IN LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. St. Julian's, Malta; 20160215 - 20160219 14 February 2016 (2016-02-14), XP051054209, Retrieved from the Internet: URL:http://www.3gpp.org/ftp/Meetings_3GPP_ SYNC/RAN1/Docs/ [retrieved on 2016-02-14]
- XIAOFEI WANG ET AL.: 'TXOP Truncation Enhancement' IEEE 802.11-16/0029R0, [Online] 18 January 2016, XP068104777 Retrieved from the Internet: <URL:https://mentor.ieee.org/802.11/documen ts?is_dcn=0029&is_year=2016>
- QUALCOMM INCORPORATED: "Channel Sensing test for LAA", 3GPP DRAFT; R4-161049 CHANNEL SENSING TEST FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Malta; 20160215 - 20160219 14 February 2016 (2016-02-14), XP051057368, Retrieved from the Internet: URL:http://www.3gpp.org/ftp/Meetings_3GPP_ SYNC/RAN4/Docs/ [retrieved on 2016-02-14]

## Description

### TECHNICAL FIELD

Embodiments pertain to systems, methods, and component devices for wireless communications, and particularly to the integration and operation of long term evolution (LTE), LTE-advanced, and other similar wireless communication systems with unlicensed frequencies.

### BACKGROUND

LTE and LTE-advanced are standards for wireless communication of high-speed data for user equipment (UE) such as mobile telephones. In LTE-advanced and various wireless systems, carrier aggregation is a technology used by LTE-advanced systems where multiple carrier signals operating on different frequencies may be used to carry communications for a single UE, thus increasing the bandwidth available to a single device. Some systems may allow operation on unlicensed frequencies where other systems may use the same frequencies. Various operations are used to allow coexistence of multiple systems such that one system will not force other systems out of the unlicensed frequencies.

The document "Control details for UL in LAA", by Qualcomm incorporated, 3GPP TSG RAN WG1 #84, R1-160885, February 14, 2016, discusses various aspects of scheduling UL transmissions in LAA, and particularly relates to operations that are performed by a live device.

US 2015/043478 A1 relates to dynamic setting of transmission time in a contention based wireless system.

The document "Channel Sensing text for LAA", by Qualcomm incorporated, 3GPP draft R4-161049, February 14, 2016, relates to LBT/channel sensing tests where interference is inserted and the duration of a new TxOP duration is tested.

### Summary of invention

The invention is defined by the independent claims. Preferred embodiments of the invention are stipulated in the dependent claims.

### BRIEF DESCRIPTION OF THE FIGURES

In the figures, which are not necessarily drawn to scale, like numerals may describe similar components in different views. Like numerals having different letter suffixes may represent different instances of similar components. The figures illustrate generally, by way of example, but not by way of limitation, various embodiments discussed in the present document.
FIG. 1 illustrates components of a communication network, in accordance with some embodiments.
FIG. 2 is a block diagram of a system including an evolved node B (eNB) and multiple UEs that may be used with some embodiments described herein.
FIG. 3 illustrates aspects of coexistence operations, in accordance with some embodiments.
FIG. 4 illustrates aspects of coexistence operations, in accordance with some embodiments.
FIG. 5A illustrates a system for unlicensed band pause testing, in accordance with some embodiments.
FIG. 5B illustrates a system for unlicensed band pause testing, in accordance with some embodiments.
FIG. 6 illustrates one example method for UE operation, in accordance with embodiments described herein.
FIG. 7 illustrates one example method for UE operation, in accordance with embodiments described herein.
FIG. 8 illustrates aspects of a UE, in accordance with some example embodiments.
FIG. 9 is a block diagram illustrating an example computer system machine which may be used in association with various embodiments described herein.
FIG. 10 illustrates aspects of a wireless apparatus or device, in accordance with some example embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

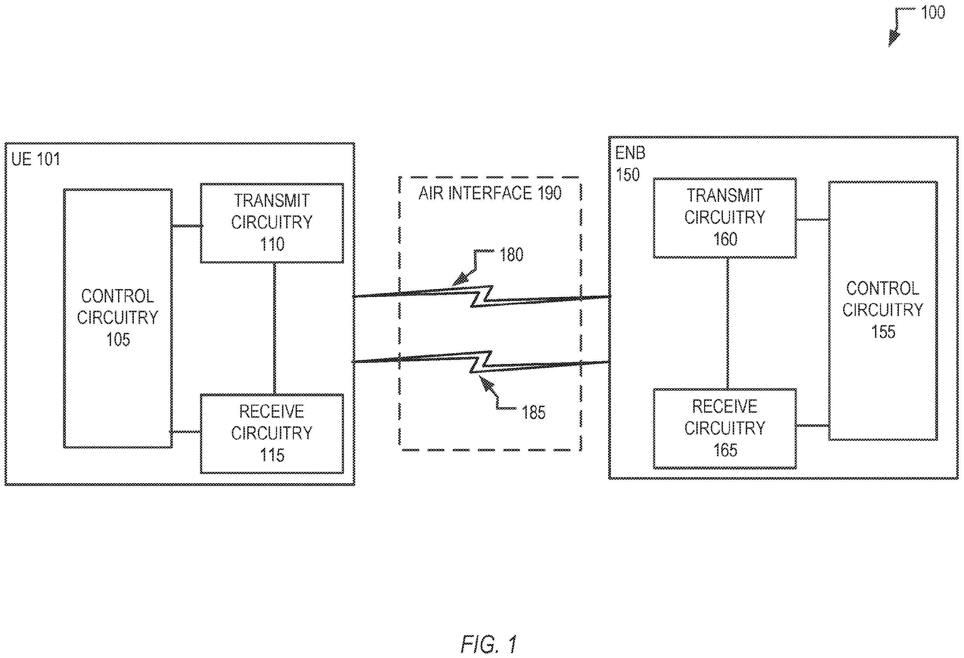

FIG. 1 illustrates a wireless network 100, in accordance with some embodiments. The wireless network 100 includes a UE 101 and an eNB 150 connected via one or more channels 180, 185 across an air interface 190. The UE 101 and eNB 150 communicate using a system that supports controls for managing the access of the UE 101 to a network via the eNB 150.

In the wireless network 100, the UE 101 and any other UE in the system may be, for example, laptop computers, smartphones, tablet computers, printers, machine-type devices such as smart meters or specialized devices for healthcare monitoring, remote security surveillance systems, intelligent transportation systems, or any other wireless devices with or without a user interface. The eNB 150 provides the UE 101 network connectivity to a broader network (not shown). This UE 101 connectivity is provided via the air interface 190 in an eNB service area provided by the eNB 150. In some embodiments, such a broader network may be a wide area network operated by a cellular network provider, or may be the Internet. Each eNB service area associated with the eNB 150 is supported by antennas integrated with the eNB 150. The service areas are divided into a number of sectors associated with certain antennas. Such sectors may be physically associated with fixed antennas or may be assigned to a physical area with tunable antennas or antenna settings adjustable in a beamforming process used to direct a signal to a particular sector. One embodiment of the eNB 150, for example, includes three sectors each covering an approximately 120 degree area with an array of antennas directed to each sector to provide 360 degree coverage around the eNB 150.

The UE 101 includes control circuitry 105 coupled with transmit circuitry 110 and receive circuitry 115. The transmit circuitry 110 and receive circuitry 115 may each be coupled with one or more antennas. The control circuitry 105 may be adapted to perform operations associated with wireless communications using congestion control. The control circuitry 105 may include various combinations of application specific circuitry and baseband circuitry. The transmit circuitry 110 and receive circuitry 115 may be adapted to transmit and receive data, respectively, and may include radio frequency (RF) circuitry or front end module (FEM) circuitry. In various embodiments, aspects of the transmit circuitry 110, receive circuitry 115, and control circuitry 105 may be integrated in various ways to implement the circuitry described herein. The control circuitry 105 may be adapted or configured to perform various operations such as those described elsewhere in this disclosure related to a UE. The transmit circuitry 110 may transmit a plurality of multiplexed uplink physical channels. The plurality of uplink physical channels may be multiplexed according to time division multiplexing (TDM) or frequency division multiplexing (FDM) along with carrier aggregation. The transmit circuitry 110 may be configured to receive block data from the control circuitry 105 for transmission across the air interface 190. Similarly, die receive circuitry 115 may receive a plurality of multiplexed downlink physical channels from the air interface 190 and relay the physical channels to the control circuitry 105. The plurality of downlink physical channels may be multiplexed according to TDM or FDM along with carrier aggregation. The transmit circuitry 110 and the receive circuitry 115 may transmit and receive both control data and content data (e.g., messages, images, video, etc.) structured within data blocks that are carried by the physical channels. For a machine configured for low bandwidth or irregular communications (e.g., utility meters, stationary sensors, etc.), customized circuitry and antennas may be used to enable communications on a narrow bandwidth (e.g., 180 kHz, or other similar narrow bandwidths) to enable the device to consume small amounts of network resources. In various embodiments, such systems may communicate via air interface 190 using unlicensed frequencies. Operation in such frequencies may use pauses during scheduled transmissions as part of coexistence procedures in order to avoid dominating use of the unlicensed channel, and in order to allow other systems an opportunity to access the unlicensed channel.

FIG. 1 also illustrates the eNB 150, in accordance with various embodiments. The eNB 150 circuitry may include control circuitry 155 coupled with transmit circuitry 160 and receive circuitry 165. The transmit circuitry 160 and receive circuitry 165 may each be coupled with one or more antennas that may be used to enable communications via the air interface 190.

The control circuitry 155 may be adapted to perform operations for managing channels and congestion control communications used with various UEs, including communication of open mobile alliance (OMA) management objects (OMA-MOs) describing application categories as detailed further below. The transmit circuitry 160 and receive circuitry 165 may be adapted to transmit and receive data, respectively, to any UE connected to the eNB 150. The transmit circuitry 160 may transmit downlink physical channels comprised of a plurality of downlink subframes. The receive circuitry 165 may receive a plurality of uplink physical channels from various UEs including the UE 101. In embodiments described herein, receive circuitry 165 may receive a plurality of uplink physical channels simultaneously on multiple unlicensed frequency channels from a single UE .

For wireless network implementations such as those illustrated by FIG. 1, there is an increasing demand for high data rates over wireless, but the usable licensed spectrum is of limited physical extent. This is the rationale behind the emerging interest on the operation of LTE system in the unlicensed spectrum in the 3rd Generation Partnership Project (3GPP), which is called LTE License-Assisted Access (LAA). Initial focus of 3GPP will use the unlicensed band as a secondary downlink component carrier while keeping the licensed band as the primary carrier for connectivity and QoS support.

One unlicensed frequency band is a range around 2.4 GHz. Another unlicensed frequency band of interest in 3GPP is the 5 GHz band, which has wide spectrum with global common availability. Although it is designated as an unlicensed or licensed-exempt spectrum, the radio equipment is certified to meet certain regulatory requirements. The 5 GHz band in the US is governed by Unlicensed National Information Infrastructure (U-NII) rules by the Federal Communications Commission (FCC). The LTE LAA design should and will consider the coexistence issue with incumbent systems. The Wireless Local Area Networks (WLANs) based on IEEE 802.11n/ac standards operate in the U-NII bands. WLANs are widely deployed both by individuals and operators for carrier-grade access service and data offloading. Coexistence with other network communication systems is a goal when extending 3GPP communications to unlicensed frequencies. Listen-before-talk (LBT) is a coexistence feature of LTE LAA system, and is a procedure whereby radio transmitters first sense the medium and transmit only if the medium is sensed to be idle.

In various systems, LAA is based on the carrier aggregation capability in LTE-advanced, which enables the transmission and reception over multiple component carriers in parallel. The use of unlicensed frequencies, however, involves additional complexities above licensed frequencies where no coexistence is needed, because the licensed use enables an expectation that the licensed channels will be available or managed by a single system In unlicensed channels, unexpected use from other systems may occur at any time. Some systems may allow relatively long transmission opportunities on unlicensed frequencies, and in order to allow other systems an opportunity to maintain reasonable quality of service, provide pauses during these longer transmission opportunities to allow other systems to take over the unlicensed frequencies..

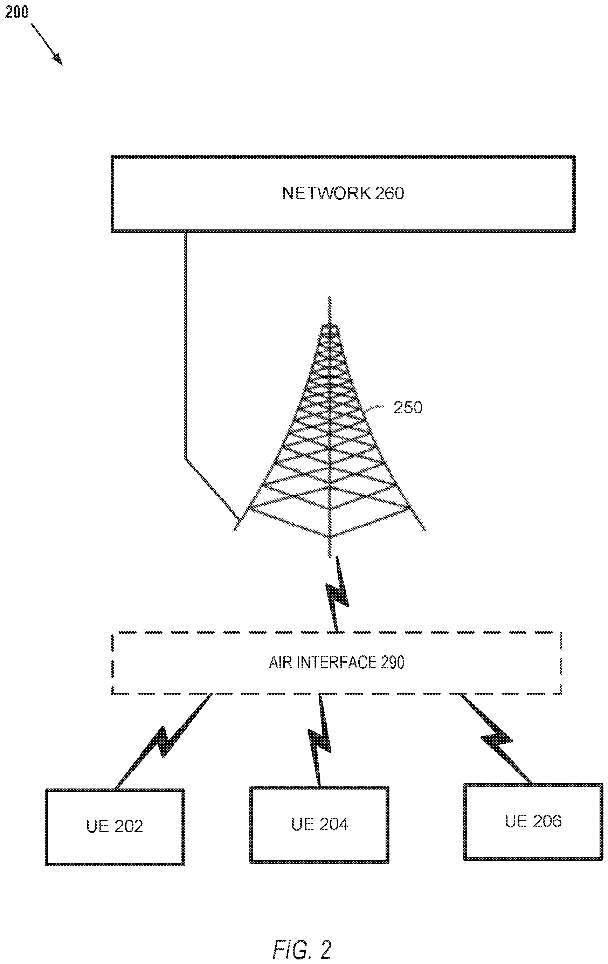

FIG. 2 is a block diagram of a system 200 including eNB and multiple UEs that may be used with some embodiments described herein. FIG. 2 describes eNB 250 coupled to UEs 202, 204, and 206 via air interface 290. eNB 250 provides the UEs 202- 206 with access to network 260, which may be a wide area network or the Internet. Any of these elements may be similar to corresponding elements described above. In various embodiments, in order to access the unlicensed channel, UEs 202, 204, and 206 perform coexistence operations, and use the subframes allocated by eNB 250 to upload data including bundled hybrid automatic repeat request (HARQ) messages to eNB 250 using the allocated subframes. In some embodiments, eNB 250 comprises a single device. In other embodiments, eNB 250 or any other eNB described herein may be implemented in a cloud radio area network (C-RAN) structure, with one or more baseband processors in a first component device of the eNB and one or more antennas in one or more other devices coupled to the first component device. For example, in some such embodiments, a first component device having baseband processors is coupled to one or more second component devices each having one or more antennas, and each being connected to the first component device via a fiber optic connection or some other wired or wireless connection. In some systems, the transmission frames or times allocated to a device are beyond a threshold coexistence time, and the transmitting device will thus include a pause after a first portion of the transmission to allow other devices or systems to access the channel. This may be particularly important to allow systems which may transmit small amounts of data on a regular bases, such as voice transmissions. Without regular access to a channel, the quality of the voice transmission will be inadequate. Embodiments thus allow coexistence with such systems (e.g. voice over internet protocol (VoIP)) while allowing the other systems to maintain quality of service on unlicensed channels.

European telecommunications standards institute (ETSI) broadband radio access networks (BRAN) introduce a pause in longer transmit opportunity (TxOP) frames (e.g., TxOP greater than or equal to 8 milliseconds) in order to allow third party voice over internet protocol (VoIP) systems to grasp the channel. If this happens, then the original TxOP user loses the channel, even if the third party VoIP transmission does not consume all of the remaining TxOP time. Embodiments described herein address how to test the (e.g., >=100µs) pause in a 8ms TxOP in the context of equipment certification.

Some embodiments described herein are test cases for a 100µs pause in a 8ms TxOP in BRAN standard. It will be apparent that the devices and methods described herein will also apply to other TxOP and pause timings. In some embodiments, WiFi uses the network allocation vector (NAV) concept (e.g. virtual carrier sensing) which is very useful for achieving the testing while MuLTEfire unlicensed communication systems may not include NAV.

In some embodiments with a pause to be inserted in 8ms TxOP frames, the EN 301 893 standard requires for 8ms TxOPs to use a >=100 µs pause. In such embodiments, the maximum Channel Occupancy Time (COT) of 6 ms may be increased to 8 ms by inserting one or more pauses. The minimum duration of a pause may be 100 µs. the maximum duration (Channel Occupancy) before including any such a pause may be 6 ms, and a pause duration is not included in the channel occupancy time. In other embodiments, other values for TxOP time (e.g., 100us pause for 8ms TxOP, 200us pause for 10ms TxOP, or any other configuration) may be used. While examples below are described for 100 µs pause times, any other pause duration may be applied in various different embodiments.

In various systems, a pause may interrupt the channel usage of a given user. During this interruption, a second user may grab the channel (for example, for a VoIP transmission). The pause concept thus may help to ensure continued quality-of-service (QoS) for VoIP type of transmissions, or QoS for various systems that use unlicensed frequencies

Some embodiments herein describe a suitable (e.g. normative) test making sure that the Unit under Test (UUT) suitably implements a pause as part of coexistence on unlicensed channels. In some embodiments, 8ms frames are mainly designed for MuLTEfire applications. Other embodiments may use pause testing in conjunction with WiFi systems modified to use longer communication transmissions (e.g., longer than transmissions used by WiFi systems such as IEEE 802.11ax based WiFi).

Embodiments below describe test mechanisms for verifying the pause to be inserted in 8ms TxOP frames. In such embodiments, the following behavior may be verified: in a single User Case (e.g., only User 1 and a corresponding receiver client are present), the transmission of a 8ms TxOP frame may be forced for the test (e.g., the same may be performed for any other TxOP frame length that requires the inclusion of a pause), and the presence of a pause that is greater than or equal to 100µs (or any other value prescribed for particular system) may be verified through measurement of a silence period followed by a continued transmission. Additionally, embodiments may test whether the continued transmissions either i) correspond to the continuation of the original TxOP (e.g., correct behavior) or ii) whether a new TxOP is initiated (e.g. incorrect behavior).

Given the above, in some embodiments, procedures for testing include: if a NAV (e.g., virtual carrier sensing) is available, the NAV may be set for the entire TxOP duration plus the pause. If the transmission resumes after the pause, it may be a continuation of the original TxOP since the NAV may prevent the triggering of any new TxOP.

In systems where the NAV is not available, but rather a scheduling of UL sub-frame lengths in physical downlink control channels (cPDCCH) is present (e.g., as used in some MuLTEfire systems), then a system may decode the cPDCCH and identify whether UL frames are scheduled in the TxOP after the pause. In some such embodiments, any observed energy in the air after the pause (e.g., corresponding to the uplink scheduling in the cPDCCH) may be a continuation of the original TxOP (e.g., the erroneous triggering of a new TxOP can be excluded).

Alternatively to any of the above mentioned techniques, some embodiment systems may scan after the Pause for the typical preambles to be used at the start of a new frame. In such embodiments, if energy occurs in the air and no such "start of the frame preambles" are identified (e.g., through cross-correlation with the corresponding a-priori known sequences), then it may be a continuation of the original TxOP (e.g., the erroneous triggering of a new TxOP can be excluded). In still further embodiments, any combination of the above techniques may be utilized.

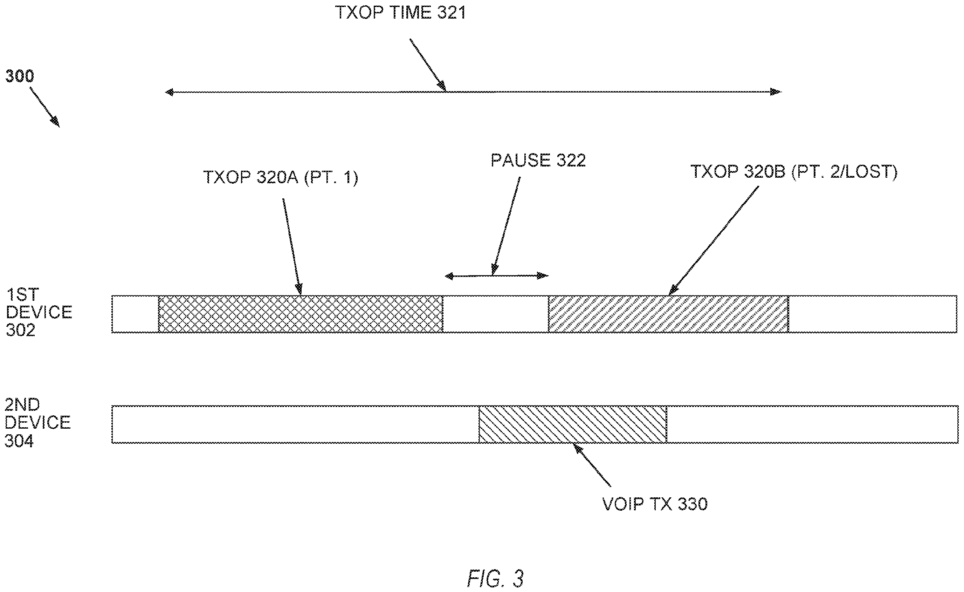

FIG. 3 then illustrates aspects of coexistence on a single unlicensed channel using a pause, in accordance with some embodiments. FIG. 3 shows channel use on an unlicensed channel 300 during a TXOP time 321. A first device 302 operating in accordance with embodiments described herein is scheduled with a TXOP over TXOP time 321. At the appropriate time, the first device 302 begins and transmits during a first part of the TXOP 320 shown as TXOP 320A. After the initial portion of the transmission TXOP 320A, the first device 302 inserts pause 322 as part of coexistence operations. During pause 322, a second device 304 transmits VOIP TX 330 on the channel 300. During pause 322, the first device performs LBT operations to see if another device uses the channel 300. In the illustrated embodiment of FIG. 3, the first device 302 will detect VOIP TX 330 using LBT during pause 322, and so a second part of the transmission opportunity TXOP 320B is lost.

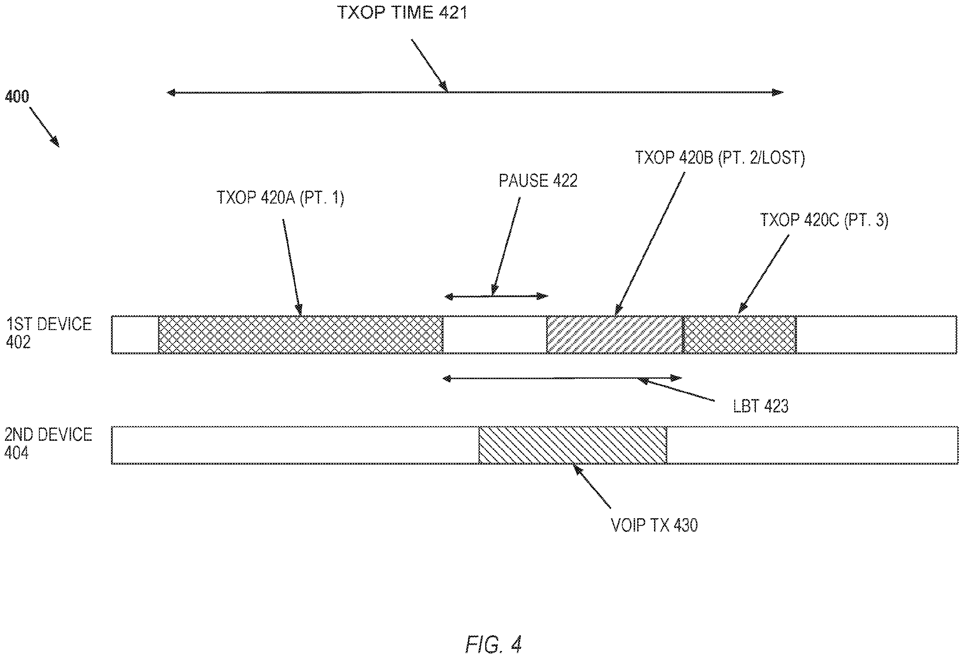

FIG. 4 illustrates aspects of another coexistence operation on a single unlicensed channel using a pause, in accordance with some embodiments. FIG. 4 is similar to FIG. 3, with a first device 402 using unlicensed channel 400 for a TXOP 420 during TXOP time 421. Following a successful portion TXOP 420A, a pause 422 is inserted (e.g., after 6 ms), and second device 404 takes over the channel for a VOIP TX 430. In contrast with FIG. 3, however, only part of the remaining portion of TXOP 420 is lost, shown as TXOP 420B, and the first device listens to the channel to see if any portion of the TXOP time 421 on channel 400 may be used following VOIP TX 430. Thus, in the embodiment illustrated in FIG. 4, the LBT 423 procedure that begins at the same time as pause 422 and detects VOIP TX 430 using unlicensed channel 400 will continue to monitor channel 400. When VOIP TX 430 ends, the LBT 423 will verify that the channel is free for a threshold amount of time before transmitting on channel 400 for the remaining portion of TXOP TIME 421, with the transmission shown as TXOP 420C.

In an example embodiment of a multi-user case (e.g., besides User 1 and a corresponding receiver client, there are further Users competing for the channel - an example is the VoIP "User 2" in Figure 1), a "User 1" may be forced to trigger the transmission within a 8ms TxOP including a Pause and a "User 2" may be forced to trigger the transmission of a (multiple) VoIP packet(s) during the Pause of "User 1." Such transmissions may be forced by control or processing circuitry of a test device or test apparatus. For "User 1," two possible cases may be considered. In the first case, "User 1" may identify that the channel has been taken by another User during the pause and "User 1" may consider the TxOP to be lost (e.g., as illustrated in FIG. 3). Any future transmission may be based on a new transmission. In the second case, "User 1" may identify that the channel has been taken by another User (e.g. "User 2") during the pause and "User 1" may wait until the other User has finalized its transmission (e.g., a VoIP transmission may be less than a few milliseconds). In case that the original TxOP duration (e.g., including the Pause) is not entirely used up, then "User 1" may take back the channel and use it until the end of the original grant (e.g., 8ms plus Pause duration). The basic principle is illustrated in FIG. 4, where a 3rd party (e.g., "User 2" or VoIP device) user may grab the channel during the TxOP pause, and the original TxOP "User 1" may takes the channel back afterwards.

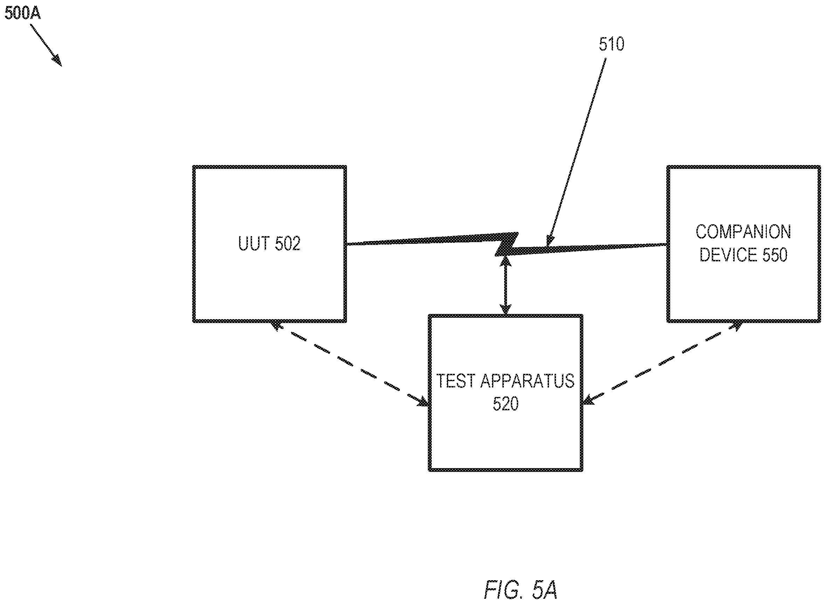

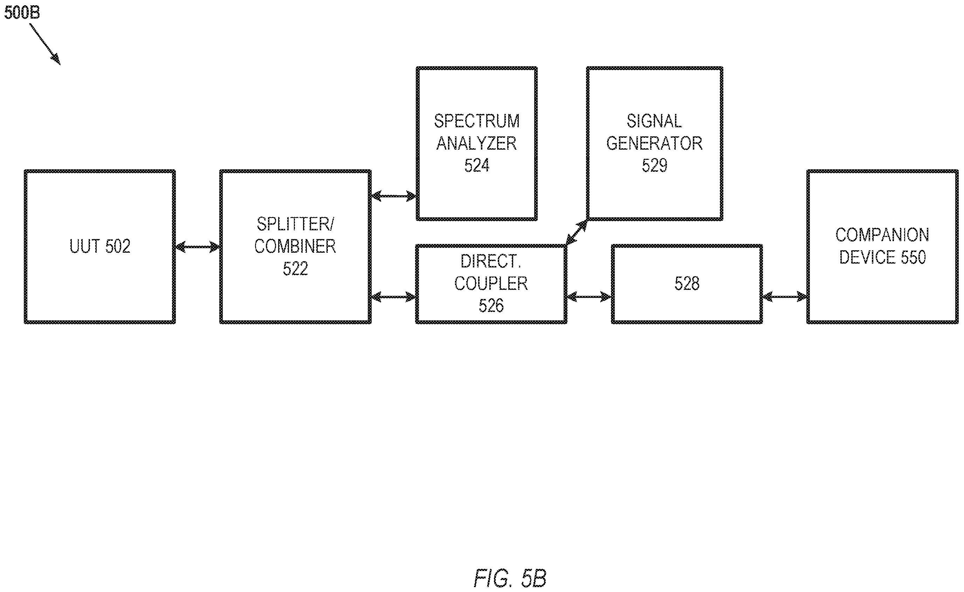

FIGs. 5A and 5B illustrate embodiments of systems, devices, circuitry, and apparatus that may be used to test for the pause operations described in FIGs. 3 and 4. FIG. 5A illustrates a simple system 500A where a UUT (e.g., UE 101 of FIG. 1 or any UE or device of FIGs. 1, 2, 8, 9, or 10) sends transmission(s) 510 to a companion device 550, with the transmission(s) 510 monitored by a test apparatus 520. In some embodiments, monitored transmissions 510 are only from UUT 502 to companion device 550. In other embodiments, such as higher frequency systems with control signaling during a TXOP, signals in both directions may be monitored. In some systems, test apparatus 520 includes control circuitry to send commands directly to UUT 502 and companion device 550. Such control circuitry may communicate a transmission power, a TXOP time, or any other such system command with UUT 502 and/or companion device 550. Additionally, any other such system operation information may be communicated to or from any of the devices via such connections. These connections may be direct (e.g., wired) communications, or may be wireless communications using any available wired communication systems.

FIG. 5B illustrates a test system 500B for testing for a pause within a transmit opportunity in an unlicensed band, in accordance with some embodiments. System 500B includes UUT 502 and companion device 550, similar to system 500A. System 500B then includes a splitter/combiner 522 which splits the transmission from UUT 502 so that part of the signal goes to spectrum analyzer 524. Spectrum analyzer 524 monitors the transmission from UUT 502 to determine when power is being transmitted on die unlicensed frequencies and if a pause occurs during a TXOP when expected. In some embodiments, control circuitry manages both UUT 502 and spectrum analyzer 524 to synchronize the expected TXOP and pause times.

Another portion of the output transmission from UUT 502 and splitter/combiner 522 goes to directional coupler 526, which allows a signal generator 529 to input a signal on the unlicensed band. Signal path 528 then allows the signal to reach companion device 550. The signal from signal generator 529 is be received at UUT via directional coupler 526 and splitter/combiner 522. Tire actions of UUT 502 after the pause may then depend on the characteristics of the input signal from signal generator 529 (if any). Spectrum analyzer 524 may determine if the UUT 502 appropriately follows the examples of either FIG. 3 or FIG. 4, or if the UUT 502 incorrectly transmits while a signal is being sent by signal generator 529.

As mentioned above, in various embodiments, control circuitry may be coupled to any of the above elements as part of a test apparatus to manage and synchronize the operations of a test for pause operations. Additionally, a memory and various other elements of a test apparatus may process and record the data to confirm that the UUT operates with the correct coexistence pause procedures or operates outside of the procedures and requires adjustment. In some embodiments, control circuitry automatically modifies settings of UUT 502 based on detected errors (e.g., timing adjustments, power adjustments, etc.) and re-tests UUT 502 based on updated device settings.

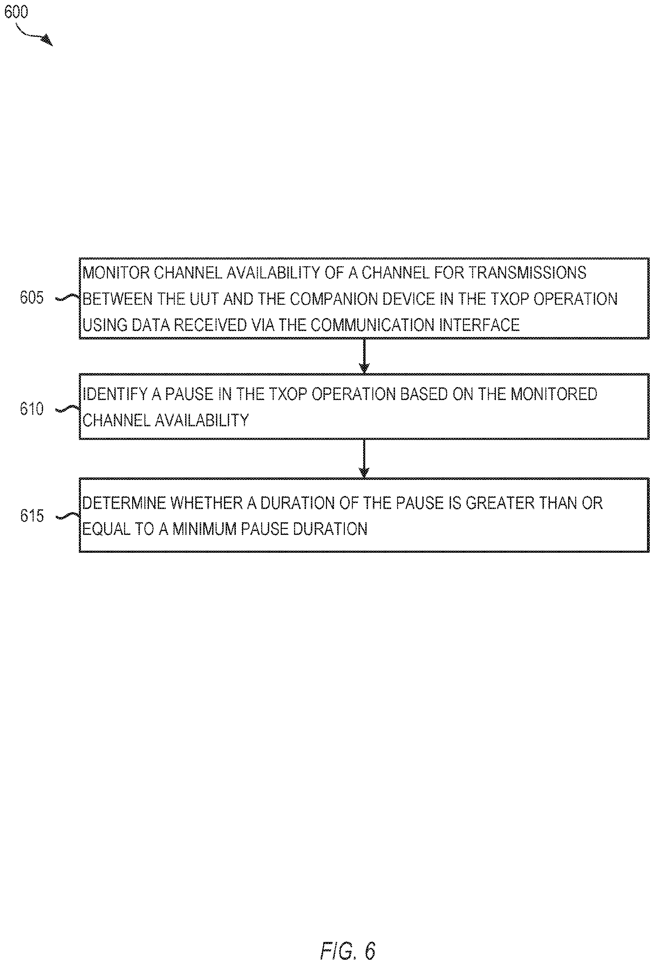

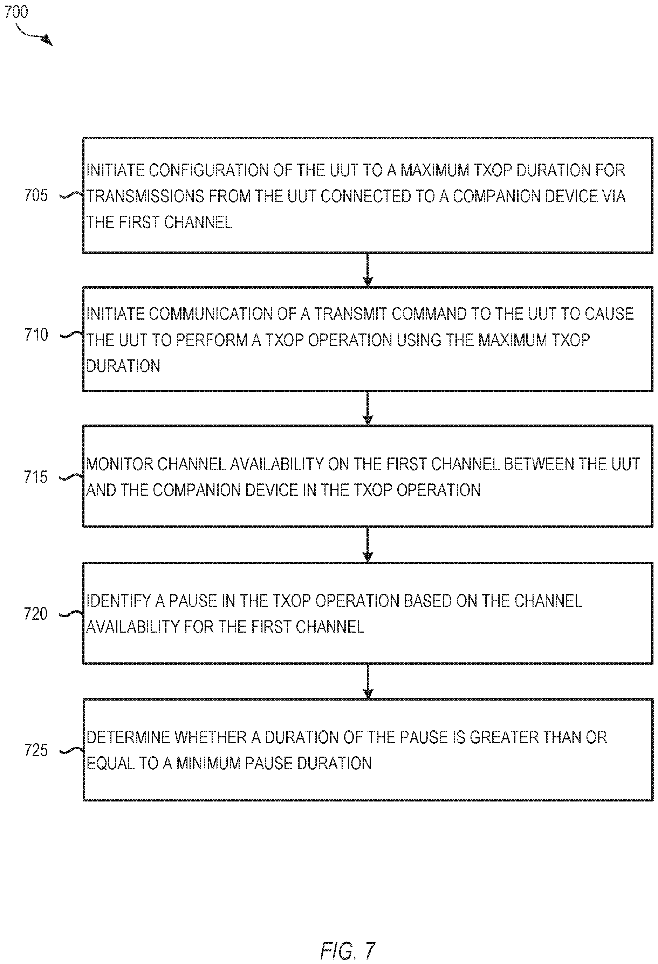

FIGs. 6 and 7 illustrate example methods for pause testing, in accordance with various embodiments. FIG. 6 shows method 600 for pause testing, in accordance with various embodiments. Method 600 may be implemented by system 500A or 500B, or any other such system for testing coexistence operations including a pause as described herein. In some embodiments, method 600 is implemented as a computer readable storage medium comprising instructions that, when executed by one or more processors, cause a test apparatus to cany out the operations of method 600. In some embodiments, method 600 is implemented by control circuitry causing a test system to manage and detect communications.

Method 600 includes operation 605 for monitoring or causing a test system to monitor channel availability of a channel for transmissions between a UUT and a companion device in a TXOP operation. Operation 610 involves identifying or causing a test system to identify a pause in a TXOP operation based on monitored channel availability. In some such embodiments, the channel availability monitored in operation 610 is controlled by transmissions on the monitored channel initiated by control circuitry (e.g., using a signal generator such as signal generator 529). Operation 615 then involves determining whether a duration of an identified pause is greater than or equal to a minimum pause duration threshold. Additional embodiments may further identify a resumption of transmission following an interruption, or any other such operation of a UUT in conjunction with a pause as part of a transmission from the UUT.

FIG. 7 shows method 700 for pause testing in accordance with various embodiments. Method 700 may be implemented by system 500A or 500B, or any other such system for testing coexistence operations including a pause as described herein. In some embodiments, method 700 is implemented as a computer readable storage medium comprising instructions that, when executed by one or more processors, cause a test apparatus to carry out the operations of method 700. In some embodiments, method 700 is implemented by control circuitry causing a test system to manage and detect communications. One particular embodiment of method 700 is implemented by an apparatus to verify efficiency of UUT in a TxOP operation condition comprising memory configured to receive channel data from monitoring of a first channel and processing circuitry coupled to the memory and configured to perform the operations of method 700.

As part of method 700, operation 705 functions to initiate configuration of the UUT to a maximum TxOP duration for transmissions from the UUT connected to a companion device via the first channel. Various other settings, including settings for a spectrum analyzer, signal generator, companion device, or any other such test system element may also be set at this point. Various details related to system settings are discussed in more detail below.

Communication of a transmit command to the UUT to cause the UUT to perform a TxOP operation using the maximum TxOP duration is then initiated in operation 710. While in some embodiments, the system may merely monitor operation of the UUT, in method 700, control circuitry is used to directly initiate transmissions by the UUT in order to directly manage test of the pause operation. In other embodiments, various other settings on a UUT either directly in control of the test system or independent from the test system may be used.

In operation 715, the apparatus monitors channel availability on the first channel between the UUT and the companion device in the TxOP operation. Such channel availability may be monitored using a spectrum analyzer sensing the frequencies associated with the unlicensed channel. Other systems may detect and monitor the channel availability using various other transmission lines/antennas and receive circuitry systems.

The processing circuitry then identifies a pause in the TxOP operation in operation 720 based on the channel availability for the first channel. In operation 725, the processing circuitry determines whether a duration of the pause is greater than or equal to a minimum pause duration. In various systems, the data from monitoring in operation 715 may be used and stored in different ways to determine whether the pause criteria is met. In some embodiments, real or near real-time processing is used. Results may then either be output identifying failures or test success, or used to initiate further tests. In some embodiments, failures identified in operation 725 are used to modify settings for the UUT and to repeat operations 705-725 using the updated UUT settings. In further embodiments, many repetitions of operations 705-725 may be performed using different device settings and different channel availability environments (e.g., using different signals from a signal generator such as signal generator 529), and additional operations may be tested such as use of the channel during a TXOP time when the channel becomes available (e.g. as illustrated by FIG. 4).

While embodiments above and below are described with various operations and steps, in various additional embodiments, the operations described above and below may be repeated in various orders, and may include intervening steps.

The following then describes aspects of a test case embodiment for 2.4 GHz operation assuming that NAV or cPDCCH or preamble detection is available. The steps below define the procedure to verify the efficiency of UUT when TxOP increases with and without pause during the transmission. This method can be applied on Load Based Equipment and Frame Based Equipment defined in various standards documents, (e.g., For IEEE 802.11^{™} [i.4] and IEEE 802.11ac^{™} [i.5] equipment, see clause 4.2.7.3.2), with the limits to be applied for the (minimum) Idle Period and the maximum Channel Occupancy Time are as defined for other types of Load Based Equipment, such as clause 4.2.7.3.2, Option A point 2) and point 3) or Option B point 2) and point 3).

In a first step of such an embodiment, the UUT may connect to a companion device during the test. The interference signal generator, the unwanted signal generator, the spectrum analyzer, the UUT, and the companion device are connected using a set-up equivalent to the example given in FIG. 5B, although the interference and unwanted signal generator do not generate any signals at this point in time. In such an embodiment, the spectrum analyzer is used to monitor the transmissions of both the UUT and the companion device and it should be possible to distinguish between either transmission. In addition, the spectrum analyzer is used to monitor the transmissions of the UUT in response to the interfering and the unwanted signals. The received signal level (e.g., wanted signal from the companion device) is adjusted at the UUT to the value defined for Frame Based Equipment or for Load Based Equipment. Testing of unidirectional equipment does not require a link to be established with a companion device. As part of the first step in such an embodiment, the analyzer may be set as follows: RBW: ≥ Occupied Channel Bandwidth, or if the analyzer does not support this setting, the highest available setting may be used; VBW: 3 × RBW, or if the analyzer does not support this setting, the highest available setting may be used; Detector Mode- RMS; Centre Frequency- Equal to the center frequency of the operating channel; Span- 0 Hz; Channel Occupancy Time- approximately 6ms, 8ms, or 10ms; Sweep time- greater than the maximum Channel Occupancy Time; Pause- 100us; Trace Mode- Clear Write; Trigger Mode- Video. In other embodiments, other settings may be used. Additionally, while particular settings are described (e.g., 6ms), it is to be understood that the actual test values are approximate, and appropriate results can be achieved with different settings in different embodiments depending on overall system operation.

In a second step, die UUT is configured for normal transmissions with a sufficiently high load resulting in a minimum transmitter activity ratio [e.g., (TxOn / (TxOn + TxOff))] of 0.3. Where this is not possible, the UUT may be configured to the maximum load possible. For Frame Based Equipment, using the procedure defined in the above mentioned IEEE standard section 4.2.7.3.1, it may be verified that the UUT complies with the maximum Channel Occupancy Time and minimum Idle Period defined in the standard. When measuring the Idle Period of the UUT, it may not include the transmission time of the companion device. For Load Based equipment, using the procedure defined in the standard, it may be verified that the UUT complies with the maximum Channel Occupancy Time and minimum Idle Period defined standard. When measuring the Idle Period of the UUT, it may not include the transmission time of the companion device. In other systems (e.g., systems not operating in accordance with the above IEEE standards), other procedures may be used. The limits to be applied for the minimum Idle Period and the maximum Channel Occupancy Time are the same as defined for other types of Load Based Equipment. The Idle Period is considered to be equal to the CCA or Extended CCA.

Then, to test the pause, the control circuitry forces the UUT to a 8ms maximum TxOP duration, requiring the insertion of a roughly greater than or equal to 100µs pause somewhere within the TxOP.

If the UUT supports NAV, the NAV is set to the TxOP duration plus the pause duration. When the transmission resumes after the Pause, it is a continuation of the original TxOP, and is not a new UUT TxOP since the operation is still within the NAV. During the NAV duration, the channel availability is measured at specific time instances (e.g., every few µs). The system then verifies whether the minimum pause duration is met (e.g., taking into account the measurement uncertainty introduced by measurements of discrete instances of time and possibly considering a distribution of measured pause durations over a given measurement period). The system then verifies that the transmission resumes after the pause.

If the UUT supports cPDCCH, then transmissions are scheduled in the TxOP part after the Pause. When the transmission resumes after the Pause, it is a continuation of the original TxOP, and it is not a new UUT TxOP since the operation is still within the scheduled frame. During the scheduled frame duration (as specified in the cPDCCH), the system measures the channel availability at specific time instances (e.g., every few us) and verifies whether the minimum pause duration is met (e.g., taking into account the measurement uncertainty introduced by measurements of discrete instances of time and possibly consider a distribution of measured pause durations over a given measurement period). The system then verifies that the transmission resumes after the pause.

For preamble detection, when the transmission resumes after the Pause, scan for the preambles and possibly other a-priori known symbols/samples (e.g., signals convolved by a propagation channel impulse response). The system searches for a "start of frame preamble" after the pause. For the continuation of a TxOP in embodiments which support this operation, identifying such a preamble prevents the continuation of the TxOP.

Continuing as part of step two, the system then operates to verify whether the original user does not restart transmission after the pause when a third party (e.g., VoIP User) grabs the channel during the pause, and further forces a third party user to take the channel during the pause duration by transmission of a VoIP packet frame. The system then operates to verify that the original user does not resume its transmission during the duration of the third party transmission; to verify whether the original user does only restart transmission after termination of a third party (VoIP User) grabbing the channel during die pause; and to force a third party user to take the channel during the pause duration by transmission of a VoIP packet frame.

The operations may then vary depending on the support for NAV and cPDCCH. NAV supporting systems verify that prior to the end of the original NAV, the original user either i) does not resume its transmission at all until the end of the original NAV or ii) resumes its transmission after termination of the third party transmission until at most the end of the original NAV. CPDCCH supporting systems verify that prior to the end of the original scheduled frame (e.g., as indicated in cPDCCH), the original user either i) does not resume its transmission at all until the end of the original scheduled frame (e.g., as indicated in cPDCCH) or ii) resumes its transmission after termination of the third party transmission until at most the end of the originally scheduled frame. Preamble detection in various systems operates to verify whether the original user does only restart transmission after termination of a third party (e.g. VoIP User) grabbing the channel during the pause. Operation may force a third party user to take the channel during the pause duration by transmission of a VoIP packet frame. The system then operates to verify that prior to the end of the original scheduled frame (e.g., before detecting "start of a TxOP preambles"), the original user either i) does not resume its transmission at all until the end of the original scheduled frame or ii) resumes its transmission after termination of the third party transmission until at most the end of the originally scheduled frame. In some embodiments, the upper preamble detection may not be feasible, in which case, these cases are differentiated.

In step three, an interference signal (e.g., as defined clause B.7 in the above mentioned IEEE standard) is then injected on the current operating channel of the UUT. The power spectral density level (at the input of the UVT) of this interference signal may be equal to the detection threshold defined in defined in the standard.

Step four then involves verification of a reaction to the interference signal (e.g., LBT testing). For such verification, the spectrum analyzer may be used to monitor the transmissions of the UUT on the selected operating channel with the interfering signal injected. This may involve a spectrum analyzer sweep to be triggered by the start of the interfering signal.

It may then be verified that the UUT may stop transmissions on the current operating channel. The UUT is assumed to stop transmissions within a period equal to the maximum Channel Occupancy Time. Apart from Short Control Signaling Transmissions, there may be no subsequent transmissions while the interfering signal is present. The UUT does not resume normal transmissions as long as the interference signal is present, so the monitoring time may need to be 60 s or more. The UUT may continue to have Short Control Signaling Transmissions on the operating channel while the interfering signal is present, and the verification of the Short Control Signaling transmissions may operate with the analyzer settings to be changed (e.g. sweep time). In some embodiments, this step may involve equipment switching to a non-adaptive mode.

In step 5, the unwanted signal is added. With the interfering signal present, a 100 % duty cycle continuous wave (CW) signal is inserted as the unwanted signal. The frequency and the level are provided in Table 10 in the above mentioned IEEE standard. In other embodiments, other signals may be used.

The spectrum analyzer may be used to monitor the transmissions of the UUT on the selected operating channel. This may operate with the spectrum analyzer sweep to be triggered by the start of the unwanted signal. Using the procedure defined in clause 5.4.6.2.1.5 of the above mentioned IEEE standard, it may be verified that: the UUT may not resume normal transmissions on the current operating channel as long as both the interference and unwanted signals remain present; the UUT is not resuming normal transmissions as long as the interference and unwanted signals are present (the monitoring time may need to be 60 s or more); and that the UUT may continue to have Short Control Signaling Transmissions on the operating channel while the interfering and unwanted signals are present. These transmissions may comply with the limits defined in clause 4.3.2.6.4.2 of the above mentioned IEEE standard. The verification of the Short Control Signaling transmissions may operate with the analyzer settings to be changed (e.g., sweep time settings).

Step six then involves removing the interference and unwanted signal. Upon removal of the interference and unwanted signals, the UUT is allowed to start transmissions again on this channel. However, this is not a requirement and, therefore, does not necessarily require testing in all embodiments.

In step seven, the above listed steps two through six may be repeated for each of the frequencies to be tested. These procedures may be repeated for different clear channel assessment (CCA) classes, collision rates, types of traffic (e.g., uplink, downlink, uplink/downlink), traffic loads, signal levels, and such. Various metrics may be used, including throughput, packet loss, and latency jitter. In other embodiments, other metrics may be used.

While the above steps are described with details associated with testing of bandwidths around 2.4 GHz operation, other embodiments may cover other frequency operations. Operations for frequencies around 5GHz operation may operate similarly to the embodiment described above. For some 5GHz operation tests, the UUT may be configured to operate at a maximum output power level. In one possible configuration, the received signal level (e.g., a desired signal from a companion device) at the UUT is sufficient to maintain a reliable link for the duration of the test. One possible value for such a received signal level setting that can be used is -50dBm/MHz. Some other embodiments may use a value within a few dBm/MHz of this setting. In other embodiments, other settings may be used. Further, in addition to the analyzer settings discussed above, some embodiments may use an external trigger mode as an alternative to a video trigger mode.

In step two for 5GHz operations, in one embodiment, the UUT is configured for normal transmissions with a payload resulting in a minimum transmitter activity ratio of 30%. In other embodiments, the setting may be within a few percentage points of 30%. In some embodiments, the UUT may be configured for a maximum payload possible. Using a procedure defined in clause 5.4.9.2.2 of the above mentioned IEEE standard, the system verifies that the UUT complies with a maximum channel occupancy time and a minimum idle period. These values may be different for frame based tests and load based tests. For IEEE 803.11 [i.4] and 802.11ac [i.5] equipment, the limits to be applied for minimum idle period and maximum channel occupancy time are as defined for other types of load based equipment as defined in clauses 4.2.7.3.2 option A point 2 and point 3 or option B points 2 and 3. In step three, the interference signal may be particularly adapted for operations and regulations covering 5GHz systems.

In 5GHz systems, the UUT may be assumed to stop transmissions within a period equal to the maximum channel occupancy time with modifications made for short control signaling transmissions on a current operating channel. For equipment having simultaneous transmissions on multiple operating channels (adjacent or non-adjacent), the equipment may continue transmissions on other channels. To verify that the UUT is not resuming normal transmissions as long as the interference signal is present, the monitoring time may be extensive (e.g., several seconds, 60 s, or more), in which case a segmented measurement may be performed in order to achieve an appropriate resolution. Once the test is completed and the interference signal is removed, the UUT may start transmissions again on the channel as part of a separate subsequent TxOP, although in some embodiments, this is not tested and does not impact the test of the transmission pause for an earlier particular TxOP.

In addition, while the various embodiments and examples are described herein, it will be apparent that operations and elements of the various embodiments may include additional elements or intervening operations, as well as repeated elements and operations in any order that will result in a functioning embodiment in accordance with the principles described herein.

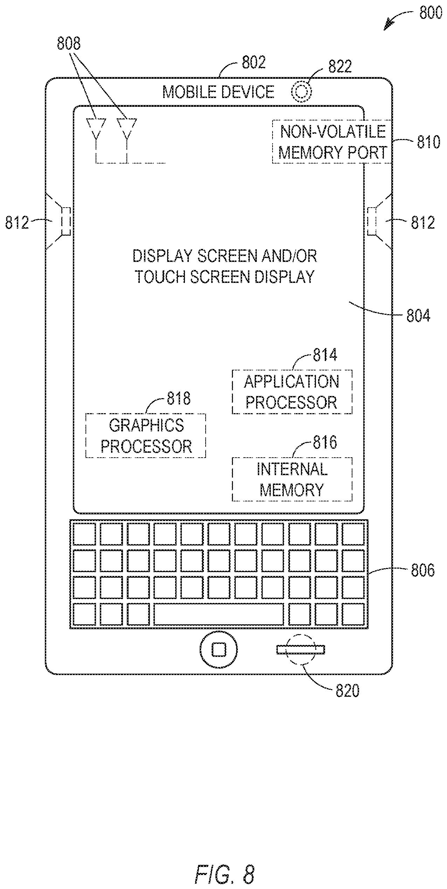

FIG. 8 shows an example UE, illustrated as a UE 800. The UE 800 may be an implementation of the UE 102, or any device described herein. The UE 800 can include one or more antennas 808 configured to communicate with a transmission station, such as a base station (BS), an eNB, or another type of wireless wide area network (WWAN) access point. The UE 800 can be configured to communicate using at least one wireless communication standard including 3GPP LTE, WiMAX, High Speed Packet Access (HSPA), Bluetooth, and WiFi. The UE 800 can communicate using separate antennas for each wireless communication standard or shared antennas for multiple wireless communication standards. The UE 800 can communicate in a WLAN, a wireless personal area network (WPAN), and/or a WWAN.

FIG. 8 also shows a microphone 820 and one or more speakers 812 that can be used for audio input and output to and from the UE 800. A display screen 804 can be a liquid crystal display (LCD) screen, or another type of display screen such as an organic light emitting diode (OLED) display. The display screen 804 can be configured as a touch screen. The touch screen can use capacitive, resistive, or another type of touch screen technology. An application processor 814 and a graphics processor 818 can be coupled to an internal memory 816 to provide processing and display capabilities. A non-volatile memory port 810 can also be used to provide data I/O options to a user. The non-volatile memory port 810 can also be used to expand the memory capabilities of the UE 800. A keyboard 806 can be integrated with the UE 800 or wirelessly connected to the UE 800 to provide additional user input. A virtual keyboard can also be provided using the touch screen. A camera 822 located on the front (display screen) side or the rear side of the UE 800 can also be integrated into a housing 802 of the UE 800.

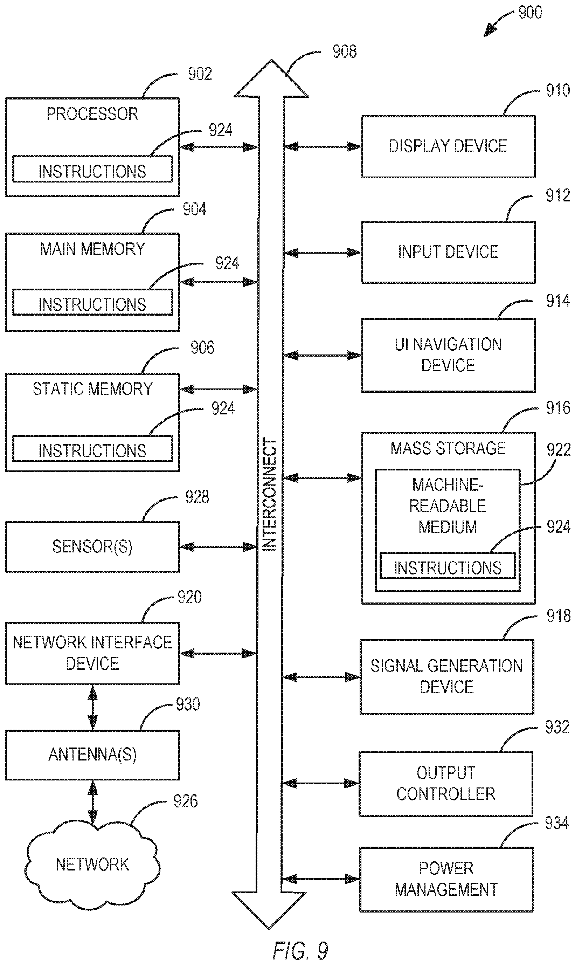

FIG. 9 is a block diagram illustrating an example computer system machine 900 upon which any one or more of the methodologies herein discussed can be run, and which may be used to implement the eNB 104, die UE 102, or any other device described herein. In various alternative embodiments, the machine 900 operates as a standalone device or can be connected (e.g., networked) to other machines. In a networked deployment, the machine 900 can operate in the capacity of either a server or a client machine in server-client network environments, or it can act as a peer machine in peer-to-peer (or distributed) network environments. The machine 900 can be a personal computer (PC) that may or may not be portable (e.g., a notebook or a netbook), a tablet, a set-top box (STB), a gaming console, a Personal Digital Assistant (PDA), a mobile telephone or smartphone, a web appliance, a network router, a network switch, a network bridge, or any machine capable of executing instructions (sequential or otherwise) that specify actions to be taken by that machine. Further, while only a single machine is illustrated, the term "machine" may also be taken to include any collection of machines that individually or jointly execute a set (or multiple sets) of instructions to perform any one or more of the methodologies discussed herein.

The example computer system machine 900 includes a processor 902 (e.g., a central processing unit (CPU), a graphics processing unit (GPU), or both), a main memory 904, and a static memory 906, which communicate with each other via an interconnect 908 (e.g., a link, a bus, etc.). The computer system machine 900 can further include a video display device 910, an alphanumeric input device 912 (e.g., a keyboard), and a user interface (UI) navigation device 914 (e.g., a mouse). In one embodiment, the video display device 910, alphanumeric input device 912, and UI navigation device 914 are a touch screen display. The computer system machine 900 can additionally include a mass storage device 916 (e.g., a drive unit), a signal generation device 918 (e.g., a speaker), an output controller 932, a power management controller 934, a network interface device 920 (which can include or operably communicate with one or more antennas 930, transceivers, or other wireless communications hardware), and one or more sensors 928, such as a GPS sensor, compass, location sensor, accelerometer, or other sensor.

The mass storage device 916 includes a machine-readable medium 922 on which is stored one or more sets of data structures and instructions 924 (e.g., software) embodying or utilized by any one or more of the methodologies or functions described herein. The instructions 924 can also reside, completely or at least partially, within the main memory 904, static memory 906, and/or processor 902 during execution thereof by the computer system machine 900, with the main memory 904, the static memory 906, and the processor 902 also constituting machine-readable media.

While the machine-readable medium 922 is illustrated in an example embodiment to be a single medium, the term "machine-readable medium" can include a single medium or multiple media (e.g., a centralized or distributed database, and/or associated caches and servers) that store the one or more instructions 924. The term "machine-readable medium" may also be taken to include any tangible medium that is capable of storing, encoding, or carrying instructions for execution by the machine and that cause the machine to perform any one or more of the methodologies of the present disclosure, or that is capable of storing, encoding, or carrying data structures utilized by or associated with such instructions.

The instructions 924 can further be transmitted or received over a communications network 926 using a transmission medium via the network interface device 920 utilizing any one of a number of well-known transfer protocols (e.g., hypertext transfer protocol (HTTP)). The term "transmission medium" may be taken to include any medium that is capable of storing, encoding, or carrying instructions for execution by the machine, and includes digital or analog communications signals or other intangible media to facilitate communication of such software.

Various techniques, or certain aspects or portions thereof, may take the form of program code (e.g., instructions) embodied in tangible media, such as floppy diskettes, CD-ROMs, hard drives, non-transitory computer-readable storage media, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a Random Access Memory (RAM), Erasable Programmable Read-Only Memory (EPROM), flash drive, optical drive, magnetic hard drive, or other medium for storing electronic data. The eNB and UE may also include a transceiver module, a counter module, a processing module, and/or a clock module or timer module. One or more programs that may implement or utilize the various techniques described herein may use an application programming interface (API), reusable controls, and the like. Such programs may be implemented in a high-level procedural or object-oriented programming language to communicate with a computer system. However, the prograin(s) may be implemented in assembly or machine language, if desired. In any case, the language may be a compiled or interpreted language, and combined with hardware implementations.

Various embodiments may use 3GPP LTE/LTE-A, Institute of Electrical and Electronic Engineers (IEEE) 902.11, and Bluetooth communication standards. Various alternative embodiments may use a variety of other WWAN, WLAN, and WPAN protocols and standards in connection with the techniques described herein. These standards include, but are not limited to, other standards from 3GPP (e.g., HSPA+, UMTS), IEEE 902.16 (e.g., 902.16p), or Bluetooth (e.g., Bluetooth 7.0, or like standards defined by the Bluetooth Special Interest Group) standards families. Other applicable network configurations can be included within the scope of the presently described communication networks. It will be understood that communications on such communication networks can be facilitated using any number of personal area networks (PANs), local area networks (LANs), and wide area networks (WANs), using any combination of wired or wireless transmission mediums.

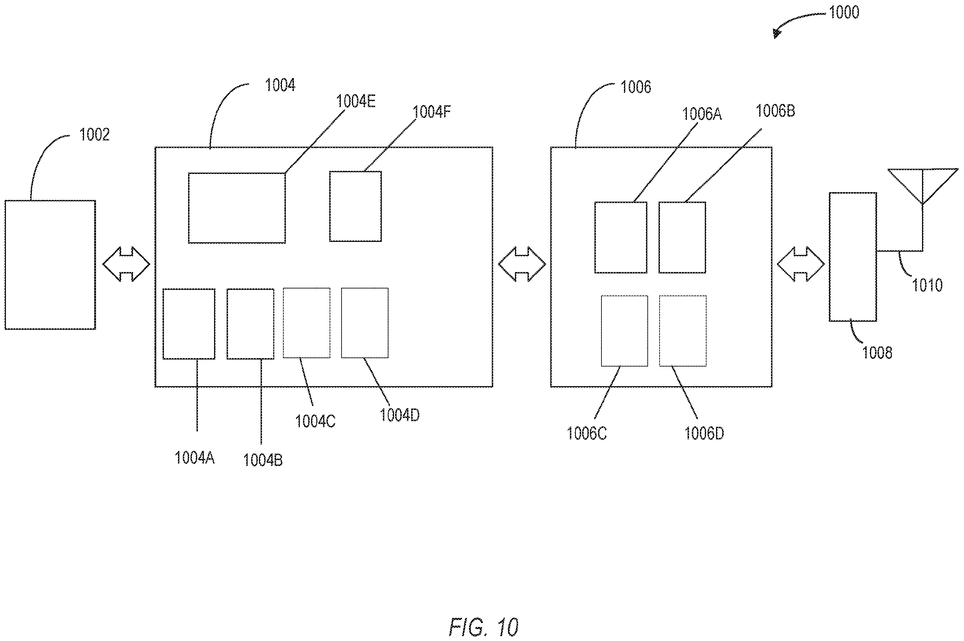

Embodiments described herein may be implemented into a system using any suitably configured hardware and/or software. FIG. 10 illustrates components of a UE 1000, in accordance with some embodiments. At least some of the components shown may be used in the UE 102 (or eNB 104) shown in FIG. 1. The tE 1000 and other components may be configured to use the synchronization signals as described herein. The UE 1000 may be one of the UEs 102 shown in FIG. 1 and may be a stationary, non-mobile device or may be a mobile device. In some embodiments, the UE 1000 may include application circuitry 1002, baseband circuitry 1004, Radio Frequency (RF) circuitry 1006, FEM circuitry 1008, and one or more antennas 1010, coupled together at least as shown. At least some of the baseband circuitry 1004, RF circuitry 1006, and FEM circuitry 1008 may form a transceiver. In some embodiments, other network elements, such as the eNB 104, may contain some or all of the components shown in FIG. 10. Other of the network elements, such as the MME 122, may contain an interface, such as the S1 interface, to communicate with the eNB over a wired connection regarding the UE 1000.

The application circuitry 1002 may include one or more application processors. For example, the application circuitry 1002 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the UE 1000.

The baseband circuitry 1004 may include circuitry such as, but not limited to, one or more single-core or multi-core processors. The baseband circuitry 1004 may include one or more baseband processors and/or control logic to process baseband signals received from a receive signal path of the RF circuitry 1006 and to generate baseband signals for a transmit signal path of the RF circuitry 1006. The baseband circuitry 1004 may interface with the application circuitry 1002 for generation and processing of the baseband signals and for controlling operations of the RF circuitry 1006. For example, in some embodiments, the baseband circuitry 1004 may include a second generation (2G) baseband processor 1004a, third generation (3G) baseband processor 1004b, fourth generation (4G) baseband processor 1004c, and/or other baseband processor(s) 1004d for other existing generations, generations in development, or generations to be developed in the future (e.g., fifth generation (5G), etc.). The baseband circuitry 1004 (e.g., one or more of the baseband processors 1004a-d) may handle various radio control functions that enable communication with one or more radio networks via the RF circuitry 1006. The radio control functions may include, but are not limited to, signal modulation/demodulation, encoding/decoding, radio frequency shifting, and the like. In some embodiments, modulation/demodulation circuitry of the baseband circuitry 1004 may include fast Fourier transforms (FFT), precoding, and/or constellation mapping/demapping functionality. In some embodiments, encoding/decoding circuitry of the baseband circuitry 1004 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 1004 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 1004e of the baseband circuitry 1004 may be configured to run elements of the protocol stack for signaling of the PHY, MAC, RLC, PDCP, and/or RRC layers. In some embodiments, the baseband circuitry 1004 may include one or more audio digital signal processor(s) (DSPs) 1004f. The audio DSP(s) 1004f may be or include elements for compression/decompression and echo cancellation and may include other suitable processing elements in other embodiments. Components of the baseband circuitry 1004 may be suitably combined in a single chip or a single chipset, or disposed on a same circuit board in some embodiments. In some embodiments, some or all of the constituent components of the baseband circuitry 1004 and the application circuitry 1002 may be implemented together, such as, for example, on a system on a chip (SOC).

In some embodiments, the baseband circuitry 1004 may provide for communication compatible with one or more radio technologies. For example, in some embodiments, the baseband circuitry 1004 may support communication with an EUTRAN and/or other wireless metropolitan area networks (WMAN), a WLAN, or a WPAN. Embodiments in which the baseband circuitry 1004 is configured to support radio communications of more than one wireless protocol may be referred to as multi-mode baseband circuitry. In some embodiments, the UE 1000 can be configured to operate in accordance with communication standards or other protocols or standards, including Institute of Electrical and Electronic Engineers (IEEE) 702.16 wireless technology (WiMax), IEEE 702.11 wireless technology (WiFi) including IEEE 702.11 ad, which operates in the 70 GHz millimeter wave spectrum, or various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc., technologies either already developed or to be developed.

The RF circuitry 1006 may enable communication with wireless networks using modulated electromagnetic radiation through a non-solid medium. In various embodiments, the RF circuitry 1006 may include switches, filters, amplifiers, and the like, to facilitate the communication with the wireless network. The RF circuitry 1006 may include a receive signal path which may include circuitry to down-convert RF signals received from the FEM circuitry 1008 and provide baseband signals to the baseband circuitry 1004. The RF circuitry 1006 may also include a transmit signal path which may include circuitry to up-convert baseband signals provided by the baseband circuitry 1004 and provide RF output signals to the FEM circuitry 1008 for transmission.

In some embodiments, the RF circuitry 1006 may include a receive signal path and a transmit signal path. The receive signal path of the RF circuitry 1006 may include mixer circuitry 1006a, amplifier circuitry 1006b, and filter circuitry 1006c. The transmit signal path of the RF circuitry 1006 may include the filter circuitry 1006c and the mixer circuitry 1006a. The RF circuitry 1006 may also include synthesizer circuitry 1006d for synthesizing a frequency for use by the mixer circuitry 1006a of the receive signal path and the transmit signal path. In some embodiments, the mixer circuitry 1006a of the receive signal path may be configured to down-convert RF signals received from the FEM circuitry 1008 based on the synthesized frequency provided by the synthesizer circuitry 1006d. The amplifier circuitry 1006b may be configured to amplify the down-converted signals, and the filter circuitry 1006c may be a lowpass filter (LPF) or band-pass filter (BPF) configured to remove unwanted signals from the down-converted signals to generate output baseband signals. Output baseband signals may be provided to the baseband circuitry 1004 for further processing. In some embodiments, the output baseband signals may be zero-frequency baseband signals, although this is not a requirement. In some embodiments, the mixer circuitry 1006a of the receive signal path may comprise passive mixers, although the scope of the embodiments is not limited in this respect.

In some embodiments, the mixer circuitry 1006a of the transmit signal path may be configured to up-convert input baseband signals based on the synthesized frequency provided by the synthesizer circuitry 1006d to generate RF output signals for the FEM circuitry 1008. The baseband signals may be provided by the baseband circuitry 1004 and may be filtered by the filter circuitry 1006c. The filter circuitry 1006c may include a LPF, although the scope of the embodiments is not limited in this respect.

In some embodiments, the mixer circuitry 1006a of the receive signal path and the mixer circuitry 1006a of the transmit signal path may include two or more mixers and may be arranged for quadrature downconversion and/or upconversion, respectively. In some embodiments, the mixer circuitry 1006a of the receive signal path and the mixer circuitry 1006a of the transmit signal path may include two or more mixers and may be arranged for image rejection (e.g., Hartley image rejection). In some embodiments, the mixer circuitry 1006a of the receive signal path and the mixer circuitry 1006a of the transmit signal path may be arranged for direct downconversion and/or direct upconversion, respectively. In some embodiments, the mixer circuitry 1006a of the receive signal path and the mixer circuitry 1006a of the transmit signal path may be configured for super-flCheterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 1006 may include analog-to-digital converter (ADC) and digital-to-analog converter (DAC) circuitry, and the baseband circuitry 1004 may include a digital baseband interface to communicate with the RF circuitry 1006.

In some dual-mode embodiments, a separate radio integrated circuit (IC) or circuitry may be provided for processing signals for each spectrum, although the scope of the embodiments is not limited in this respect.

In some embodiments, the synthesizer circuitry 1006d may be a fractional-N synthesizer or a fractional N/N+1 synthesizer, although the scope of the embodiments is not limited in this respect, as other types of frequency synthesizers may be suitable. For example, the synthesizer circuitry 1006d may be a delta-sigma synthesizer, a frequency multiplier, or a synthesizer comprising a phase-locked loop with a frequency divider.

The synthesizer circuitry 1006d may be configured to synthesize an output frequency for use by the mixer circuitry 1006a of the RF circuitry 1006 based on a frequency input and a divider control input. In some embodiments, the synthesizer circuitry 1006d may be a fractional N/N+1 synthesizer.

In some embodiments, frequency input may be provided by a voltage controlled oscillator (VCO), although that is not a requirement. Divider control input may be provided by either the baseband circuitry 1004 or the application circuitry 1002, depending on the desired output frequency. In some embodiments, a divider control input (e.g., N) may be determined from a look-up table based on a channel indicated by the application circuitry 1002.

The synthesizer circuitry 1006d of the RF circuitry 1006 may include a divider, a delay-locked loop (DLL), a multiplexer, and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 1006d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 1006 may include an IQ/polar converter.

The FEM circuitry 1008 may include a receive signal path, which may include circuitry configured to operate on RF signals received from the one or more antennas 1010, amplify the received signals, and provide the amplified versions of the received signals to the RF circuitry 1006 for further processing. The FEM circuitry 1008 may also include a transmit signal path, which may include circuitry configured to amplify signals for transmission provided by the RF circuitry 1006 for transmission by one or more of the one or more antennas 1010.

In some embodiments, the FEM circuitry 1008 may include a Tx/Rx switch to switch between transmit mode and receive mode operation. The FEM circuitry 1008 may include a receive signal path and a transmit signal path. The receive signal path of the FEM circuitry 1008 may include a low-noise amplifier (LNA) to amplify received RF signals and provide the amplified received RF signals as an output (e.g., to the RF circuitry 1006). The transmit signal path of the FEM circuitry 1008 may include a power amplifier (PA) to amplify input RF signals (e.g., provided by the RF circuitry 1006), and one or more filters to generate RF signals for subsequent transmission (e.g., by one or more of the one or more antennas 1010).

In some embodiments, the UE 1000 may include additional elements such as, for example, a memory/storage, display, camera, sensor, and/or I/O interface as described in more detail below. In some embodiments, the UE 1000 described herein may be part of a portable wireless communication device, such as a PDA, a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), or another device that may receive and/or transmit information wirelessly. In some embodiments, the UE 1000 may include one or more user interfaces designed to enable user interaction with the system and/or peripheral component interfaces designed to enable peripheral component interaction with the system. For example, the UE 1000 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be an LCD or LED screen including a touch screen. The sensor may include a gyro sensor, an accelerometer, a proximity sensor, an ambient light sensor, and a positioning unit. The positioning unit may communicate with components of a positioning network (e.g., a GPS satellite).

The antennas 1010 may comprise one or more directional or omnidirectional antennas, including, for example, dipole antennas, monopole antennas, patch antennas, loop antennas, microstrip antennas, or other types of antennas suitable for transmission of RF signals. In some multiple-input multiple-output (MIMO) embodiments, the antennas 1010 may be effectively separated to benefit from spatial diversity and the different channel characteristics that may result.

Although the UE 1000 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, field-programmable gate arrays (FPGAs), application specific integrated circuits (ASICs), radio-frequency integrated circuits (RFICs), and combinations of various hardware and logic circuitry for performing at least the functions described herein. In some embodiments, the functional elements may refer to one or more processes operating on one or more processing elements.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

While the communication device-readable medium is illustrated as a single medium, the term "communication device-readable medium" may include a single medium or multiple media (e.g., a centralized or distributed database, and/or associated caches and servers) configured to store the one or more instructions.

The term "communication device readable medium" may include any medium that is capable of storing, encoding, or carrying instructions for execution by the communication device and that cause the communication device to perform any one or more of the techniques of the present disclosure, or that is capable of storing, encoding, or carrying data structures used by or associated with such instructions. Non-limiting communication device-readable medium examples may include solid-state memories, and optical and magnetic media. Specific examples of communication device-readable media may include: non-volatile memory, such as semiconductor memory devices (e.g., EPROM, Electrically Erasable Programmable Read-Only Memory (EEPROM)) and flash memory devices; magnetic disks, such as internal hard disks and removable disks; magneto-optical disks; RAM; and CD-ROM and DVD-ROM disks. In some examples, communication device-readable media may include non-transitory communication device-readable media. In some examples, communication device-readable media may include communication device-readable media that is not a transitory propagating signal.

The instructions may further be transmitted or received over a communications network using a transmission medium via a network interface device utilizing any one of a number of transfer protocols (e.g., frame relay, internet protocol (IP), transmission control protocol (TCP), user datagram protocol (UDP), HTTP, etc.). Example communication networks may include a LAN, a WAN, a packet data network (e.g., the Internet), mobile telephone networks (e.g., cellular networks), Plain Old Telephone (POTS) networks, and wireless data networks (e.g., Institute of Electrical and Electronics Engineers (IEEE) 702.11 family of standards known as Wi-Fi^{®}, IEEE 702.16 family of standards known as WiMax^{®}), IEEE 702.15.4 family of standards, a Long Term Evolution (LTE) family of standards, a Universal Mobile Telecommunications System (UMTS) family of standards, or peer-to-peer (P2P) networks, among others. In an example, the network interface device may include one or more physical jacks (e.g., Ethernet, coaxial, or phone jacks) or one or more antennas to connect to the communications network. In an example, the network interface device may include a plurality of antennas to wirelessly communicate using single-input multiple-output (SIMO), MIMO, or multiple-input single-output (MISO) techniques. In some examples, the network interface device may wirelessly communicate using Multiple User MIMO techniques. The term "transmission medium" may be taken to include any intangible medium that is capable of storing, encoding, or carrying instructions for execution by the communication device, and includes digital or analog communications signals or other intangible media to facilitate communication of such software.

Implementation details of embodiments described above may also apply to any distributed system relying on a decentralized contention based channel access protocol (e.g. CSMA/CA). It may also apply to centralized systems when are structured to coexist with a decentralized (e.g. contention based) system. Embodiments described above may thus be used for testing of Spectrum Access System (SAS) based spectrum sharing (e.g. for 3.5GHz band tier-3 or general-authorized access users). With very few users (e.g. UEs or system devices), LTE may be deployed with a single system operating in one given channel with a contention based system added on top of the centralized (e.g. LTE) system. Such systems may operate with a transmission pause as described above, and therefore operate with the testing embodiments described herein. Thus, various embodiments may operate with both centralized and decentralized systems.

Any of the radio links described herein may thus may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 3 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth^{®}, Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others, etc. Further, embodiments described herein may be used in the context of any spectrum management scheme including dedicated licensed spectrum, unlicensed spectrum, licensed shared spectrum, and shared spectrum (e.g. licensed shared access (LSA). Such embodiments may operate with LSA in 2.3-2.4 GHz, 3.4-3.6 GHz, 3.6-3.8 GHz and further frequencies and SAS in 3.55-3.7 GHz and further frequencies. Applicable spectrum bands also include IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, etc., with some bands limited to specific region(s) and/or countries), IMT-advanced spectrum, IMT-2020 spectrum (e.g. bands which may include 3600-3800 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc.), the ITS (Intelligent Transport Systems) band of 5.9 GHz (e.g. 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz - 71 GHz band, as well as any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (e.g. below 790 MHz) where in particular the 400 MHz and 700 MHz bands are candidates. Further still, besides cellular applications, specific applications for vertical markets may be addressed such as PMSE (Program Making and Special Events), medical, health, surgery, automotive, low-latency, drones, etc. applications.

Furthermore, a hierarchical application of the scheme is possible, for example, by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc.

The embodiments described herein are also be applied, in some embodiments, to different Single Carrier or orthogonal frequency division multiplexing (OFDM) systems (e.g. cyclic prefix-OFDM, single carrier frequency division multiple access (SC-FDMA), SC-OFDM, filter bank-based multicarrier (FBMC), orthogonal frequency division multiple access (OFDMA) systems, etc.) and also to 3GPP NR (New Radio) by allocating the OFDM carrier data bit vectors to the corresponding symbol resources.

In some systems, an eNB may have multiple antennas that may be used in various groupings and with various signal modifications for each grouping to produce a plurality of APs. Each AP may be defined for one or more antennas. Each AP may correspond to a different transmission signal direction. Using the different APs, the eNB may transmit multiple layers with codebook-based or non-codebook-based precoding techniques. Each AP may correspond to a beam that transmits AP-specific CSI-RS signals. The UE may contain a plurality of receive antennas that may be used selectively to create Rx beamforming. Rx beamforming may be used to increase the receive antenna (beamforming) gain for the direction(s) on which desired signals are received, and to suppress interference from neighboring cells. Fast Rx beam refinement. in which the Rx beam direction is dynamically adjusted in response to the channel conditions measured by the UE, is desirable from a performance standpoint.

This may be particularly desirable with use of the high-frequency bands around, for example, 28GHz, 37GHz, 39GHz, and 74-71GHz, used in conjunction with carrier aggregation, which may permit networks to continue to service the never-ending hunger for data delivery. The increased beamforming gain in this frequency range may permit the UE and eNB to compensate for the increasingly likely event of severe path loss and suppress mutual user interference, leading to an increase in system capacity and coverage.

Embodiments may be implemented in one or a combination of hardware, firmware, and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), RAM, magnetic disk storage media, optical storage media, flash-memory devices, and other storage devices and media. Some embodiments may include one or more processors and may be configured with instructions stored on a computer-readable storage device.

Although an embodiment has been described with reference to specific example embodiments, it will be evident that various modifications and changes may be made to these embodiments without departing from the broader scope of the present disclosure. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure.

Such embodiments of the subject matter may be referred to herein, individually and/or collectively, by the term "embodiments" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended; that is, a system, UE, article, composition, formulation, or process that includes elements in addition to those listed after such a term in a claim are still deemed to fall within the scope of that claim. Moreover, in the following claims, the terms "first," "second," and "third," etc., are used merely as labels, and are not intended to impose numerical requirements on their objects.

## Claims

1. An apparatus (520) to verify efficiency of a unit under test, UUT (502), in a transmit opportunity, TxOP, Operation condition, the apparatus (520) comprising:
memory configured to store channel data from monitoring of a first channel; and
processing circuitry coupled to the memory and configured to:
initiate configuration of the UUT (502) to a maximum TxOP duration for transmissions from the UUT (502) connected to a companion device (550) via the first channel (705);
initiate communication of a transmit command to the UUT (502) to cause the UUT (502) to perform a TxOP operation using the maximum TxOP duration (710);
monitor channel availability on the first channel between the UUT (502) and the companion device (550) in the TxOP operation (715);
identify a pause in the TxOP operation based on the channel availability for the first channel (720); and
determine whether a duration of the pause is greater than or equal to a minimum pause duration (725).

2. The apparatus (520) of claim 1 wherein the processing circuitry is further configured to:
verify, based on data from monitoring the channel availability, that the UUT (502) resumes transmission to the companion device (550) after the pause; and
wherein the processing circuitry is configured to identify the pause in the TxOP Operation by detecting a channel energy for the first channel below a threshold energy value;
wherein the UUT (502) is connected to the companion device (550) via a network allocation vector, NAV; and
wherein the processing circuitry is further configured to:
set the NAV to a duration equal to a duration of the TxOP operation plus a duration of the pause.

3. The apparatus (520) of claim 1 wherein identifying the pause comprises identification of a contiguous period of time that the UUT (502) suspends transmission to the companion device (550).

4. The apparatus of claim 1 wherein the UUT (502) is connected to the companion device (550) via a conventional physical downlink control channel, cPDCCH; and
wherein the processing circuitry is further configured to:
schedule transmissions from the UUT (502) to the companion device (550) to be transmitted in the TxOP Operation after the pause; and
verify the scheduled transmissions from the UUT (502) to the companion device (550) are transmitted after the pause.

5. The apparatus (520) of claim 1 wherein the processing circuitry is further configured to:
process scan data for scan transmissions transmitted by the UUT (502) after the pause for frame preambles from the monitoring of the first channel; and
verify that the scanned transmissions exclude the frame preambles.

6. The apparatus (520) of claim 1 wherein the processing circuitry is further configured to:
initiate transmission of a channel take over during the pause, wherein a takeover duration is longer than the duration of the pause;
monitor channel traffic following the initiation of the channel take over; and
verify, from channel traffic monitoring, that the UUT (502) stops transmissions from the HUT during the channel take over.

7. The apparatus (520) of claim 6 wherein the processing circuitry initiates transmission of the channel take over by communicating with a third party device to use the first channel during the pause.

8. The apparatus (520) of claim 6 wherein the processing circuitry is further configured to:
identify when the third party device releases the first channel;
monitor the channel traffic after the third party device releases the first channel; and
determine that the UUT (502) resumes transmissions from the UUT (502) after the third party device releases the first channel.

9. The apparatus (520) of claim 7 wherein the first channel is associated with a NAV; and
wherein the NAV is set to a duration equal to a duration of the TxOP Operation plus a duration of the pause; and
wherein the processing circuitry is further configured to:
monitor the channel traffic for the duration of the NAV; and
determine that the UUT (502) stops transmissions from the UUT (502) after the pause until an end of the duration of the NAV.

10. The apparatus (520) of claim 7 wherein the first channel is a conventional physical downlink control channel, cPDCCH, wherein transmissions are scheduled for a frame associated with the TxOP; and
wherein the processing circuitry is further configured to:
monitor the channel traffic for the frame; and
determine that the UUT (502) stops transmissions from the UUT (502) after the pause until an end of the frame.

11. The apparatus (520) of any of claims 1-10, wherein the apparatus (520) comprises a spectrum analyzer coupled to the processing circuitry, the spectrum analyzer configured to sense transmissions on frequencies associated with the first channel, generate a stream of data from sensing the transmissions on frequencies associated with the first channel, and communicate the stream of data to the processing circuitry.

12. A computer readable storage medium comprising instructions that, when executed by processing circuitry of a test device (520), cause the device to perform operations for verifying an efficiency of a unit under test, UUT (50), in a transmit opportunity, TxOP, operation condition, the instructions causing the test device (520) to:
initiate configuration of the UUT (502) to a maximum TxOP duration for transmissions from the UUT (502) connected to a companion device (550) via a first channel;
initiate communication of a transmit command to the UUT (502) to cause the UUT (502) to perform a TxOP operation using the maximum TxOP duration;
monitor channel availability on the first channel between the UUT (502) and the companion device (550) in the TxOP operation;
identify a pause in the TxOP operation based on the channel availability for the first channel; and
determine whether a duration of the pause is greater than or equal to a minimum pause duration.

13. The storage medium of claim 12 wherein the instructions further cause the device (520) to:
initiate transmission of a channel take over by a third party device during the pause, wherein a takeover duration is longer than the duration of the pause;
monitor channel traffic following the initiation of the channel take over; and
verify, from channel traffic monitoring, that the UUT (502) stops transmissions from the UUT (502) during the channel take over;
identify when the third party device releases the first channel;
monitor the channel traffic after the third party device releases the first channel; and
determine that the UUT (502) resumes transmissions from the UUT (502) after the third party device releases the first channel.

14. A method for an apparatus (520) to verify efficiency of a unit under test, UUT (502), in a transmit opportunity, TxOP, Operation condition, the method comprising the steps of:
monitoring channel availability of a channel for transmissions between the UUT (502) and a companion device (550) in the TxOP operation using data received via a communication interface comprised in the apparatus (520);
identifying a pause in the TxOP operation based on the monitored channel availability; and
determining whether a duration of the pause is greater than or equal to a minimum pause duration.

15. The method of claim 14, further comprising:
verifying that the UUT (502) resumes transmission to the companion device (550) after the pause;
causing a third party device to take over the channel during the pause;
monitoring channel traffic while the third party device has taken over the channel; and
verifying the UUT (502) stops transmissions from the UUT (502) while the third party device has taken over the channel;
identifying when the third party device releases the channel;
monitoring the channel traffic after the third party device releases the channel; and
determining that the UUT (502) resumes transmissions from the UUT (502) after the third party devices releases the channel.

## Patentansprüche

1. Vorrichtung (520) zum Verifizieren der Effizienz einer zu testenden Einheit, UUT (502), in einer Transmit Opportunity-, TxOP-, Operation Condition, wobei die Vorrichtung (520) umfasst:
einen Speicher, der konfiguriert ist, um Kanaldaten aus der Überwachung eines ersten Kanals zu speichern;
und
eine Verarbeitungsschaltung, die mit dem Speicher gekoppelt und konfiguriert ist, um:
die Konfiguration der UUT (502) auf eine maximale TxOP-Dauer für Übertragungen von der UUT (502), die mit einer Begleitvorrichtung (550) über den ersten Kanal (705) verbunden ist, zu initiieren;
die Kommunikation eines Sendebefehls an die UUT (502) zu initiieren, um die UUT (502) zu veranlassen, eine TxOP-Operation unter Verwendung der maximalen TxOP-Dauer (710) durchzuführen;
die Kanalverfügbarkeit auf dem ersten Kanal zwischen der UUT (502) und der Begleitvorrichtung (550) in der TxOP-Operation (715) zu überwachen;
eine Pause in der TxOP-Operation basierend auf der Kanalverfügbarkeit für den ersten Kanal (720) zu identifizieren; und
zu bestimmen, ob eine Dauer der Pause größer oder gleich einer minimalen Pausendauer (725) ist.

2. Vorrichtung (520) nach Anspruch 1, wobei die Verarbeitungsschaltung ferner konfiguriert ist, um:
basierend auf Daten aus der Überwachung der Kanalverfügbarkeit zu verifizieren, dass die UUT (502) die Übertragung an die Begleitvorrichtung (550) nach der Pause wieder aufnimmt; und
wobei die Verarbeitungsschaltung konfiguriert ist, um die Pause in der TxOP-Operation durch Detektieren einer Kanalenergie für den ersten Kanal unter einem Schwellenenergiewert zu identifizieren;
wobei die UUT (502) mit der Begleitvorrichtung (550) über einen Netzwerkzuweisungsvektor, NAV, verbunden ist; und
wobei die Verarbeitungsschaltung ferner konfiguriert ist, um:
den NAV auf eine Dauer einzustellen, die gleich einer Dauer der TxOP-Operation plus einer Dauer der Pause ist.

3. Vorrichtung (520) nach Anspruch 1, wobei das Identifizieren der Pause ein Identifizieren einer zusammenhängenden Zeitspanne umfasst, in der die UUT (502) die Übertragung an die Begleitvorrichtung (550) aussetzt.

4. Vorrichtung nach Anspruch 1, wobei die UUT (502) mit der Begleitvorrichtung (550) über einen Conventional Physical Downlink Control Channel, cPDCCH, verbunden ist; und
wobei die Verarbeitungsschaltung ferner konfiguriert ist, um:
Übertragungen von der UUT (502) an die Begleitvorrichtung (550) zu planen, die in der TxOP-Operation nach der Pause übertragen werden sollen; und
zu verifizieren, dass die geplanten Übertragungen von der UUT (502) an die Begleitvorrichtung (550) nach der Pause übertragen werden.

5. Vorrichtung (520) nach Anspruch 1, wobei die Verarbeitungsschaltung ferner konfiguriert ist, um:
Abtastdaten für Abtastübertragungen zu verarbeiten, die von der UUT (502) nach der Pause für Rahmenpräambeln aus der Überwachung des ersten Kanals übertragen werden; und
zu verifizieren, dass die abgetasteten Übertragungen die Rahmenpräambeln ausschließen.

6. Vorrichtung (520) nach Anspruch 1, wobei die Verarbeitungsschaltung ferner konfiguriert ist, um:
die Übertragung einer Kanalübernahme während der Pause zu initiieren, wobei eine Übernahmedauer länger als die Dauer der Pause ist;
den Kanalverkehr nach der Initiierung der Kanalübernahme zu überwachen; und
aus der Kanalverkehrsüberwachung zu verifizieren, dass die UUT (502) Übertragungen von der HUT während der Kanalübernahme stoppt.

7. Vorrichtung (520) nach Anspruch 6, wobei die Verarbeitungsschaltung die Übertragung der Kanalübernahme durch Kommunizieren mit einer Drittvorrichtung initiiert, um den ersten Kanal während der Pause zu verwenden.

8. Vorrichtung (520) nach Anspruch 6, wobei die Verarbeitungsschaltung ferner konfiguriert ist, um:
zu identifizieren, wann die Drittvorrichtung den ersten Kanal freigibt;
den Kanalverkehr zu überwachen, nachdem die Drittvorrichtung den ersten Kanal freigibt; und
zu bestimmen, dass die UUT (502) Übertragungen von der UUT (502) wieder aufnimmt, nachdem die Drittvorrichtung den ersten Kanal freigibt.

9. Vorrichtung (520) nach Anspruch 7, wobei der erste Kanal mit einem NAV assoziiert ist; und
wobei der NAV auf eine Dauer eingestellt ist, die gleich einer Dauer der TxOP-Operation plus einer Dauer der Pause ist; und
wobei die Verarbeitungsschaltung ferner konfiguriert ist, um:
den Kanalverkehr für die Dauer des NAV zu überwachen; und
zu bestimmen, dass die UUT (502) Übertragungen von der UUT (502) nach der Pause bis zu einem Ende der Dauer des NAV stoppt.

10. Vorrichtung (520) nach Anspruch 7, wobei der erste Kanal ein Conventional Physical Downlink Control Channel, cPDCCH, ist, wobei Übertragungen für einen Rahmen geplant sind, der mit der TxOP-Operation assoziiert ist; und
wobei die Verarbeitungsschaltung ferner konfiguriert ist, um:
den Kanalverkehr für den Rahmen zu überwachen; und
zu bestimmen, dass die UUT (502) Übertragungen von der UUT (502) nach der Pause bis zu einem Ende des Rahmens stoppt.

11. Vorrichtung (520) nach einem der Ansprüche 1-10, wobei die Vorrichtung (520) einen Spektrumanalysator umfasst, der mit der Verarbeitungsschaltung gekoppelt ist, wobei der Spektrumanalysator konfiguriert ist, um Übertragungen auf Frequenzen zu erfassen, die mit dem ersten Kanal assoziiert sind, einen Datenstrom aus dem Erfassen der Übertragungen auf Frequenzen zu erzeugen, die mit dem ersten Kanal assoziiert sind, und den Datenstrom an die Verarbeitungsschaltung zu kommunizieren.

12. Computerlesbares Speichermedium, umfassend Anweisungen, die, wenn sie von einer Verarbeitungsschaltung einer Testvorrichtung (520) ausgeführt werden, die Vorrichtung veranlassen, Operationen zum Verifizieren einer Effizienz einer zu testenden Einheit, UUT (50), in einer Transmit Opportunity-, TxOP-, Operation Condition, durchzuführen, wobei die Anweisungen die Testvorrichtung (520) veranlassen zum:
Initiieren der Konfiguration der UUT (502) auf eine maximale TxOP-Dauer für Übertragungen von der UUT (502), die mit einer Begleitvorrichtung (550) über einen ersten Kanal verbunden ist;
Initiieren der Kommunikation eines Sendebefehls an die UUT (502), um die UUT (502) zu veranlassen, eine TxOP-Operation unter Verwendung der maximalen TxOP-Dauer durchzuführen;
Überwachen der Kanalverfügbarkeit auf dem ersten Kanal zwischen der UUT (502) und der Begleitvorrichtung (550) in der TxOP-Operation;
Identifizieren einer Pause in der TxOP-Operation basierend auf der Kanalverfügbarkeit für den ersten Kanal; und
Bestimmen, ob eine Dauer der Pause größer oder gleich einer minimalen Pausendauer ist.

13. Speichermedium nach Anspruch 12, wobei die Anweisungen die Vorrichtung (520) ferner veranlassen zum:
Initiieren der Übertragung einer Kanalübernahme durch eine Drittvorrichtung während der Pause, wobei eine Übernahmedauer länger als die Dauer der Pause ist;
Überwachen des Kanalverkehrs nach der Initiierung der Kanalübernahme; und
aus der Kanalverkehrsüberwachung zu verifizieren, dass die UUT (502) Übertragungen von der UUT (502) während der Kanalübernahme stoppt;
zu identifizieren, wann die Drittvorrichtung den ersten Kanal freigibt;
den Kanalverkehr zu überwachen, nachdem die Drittvorrichtung den ersten Kanal freigibt; und
zu bestimmen, dass die UUT (502) Übertragungen von der UUT (502) wieder aufnimmt, nachdem die Drittvorrichtung den ersten Kanal freigibt.

14. Verfahren für eine Vorrichtung (520) zum Verifizieren der Effizienz einer zu testenden Einheit, UUT (502), in einer Transmit Opportunity-, TxOP-, Operation Condition, wobei das Verfahren die folgenden Schritte umfasst:
Überwachen der Kanalverfügbarkeit eines Kanals für Übertragungen zwischen der UUT (502) und einer Begleitvorrichtung (550) in der TxOP-Operation unter Verwendung von Daten, die über eine Kommunikationsschnittstelle empfangen werden, die in der Vorrichtung (520) enthalten ist;
Identifizieren einer Pause in der TxOP-Operation basierend auf der überwachten Kanalverfügbarkeit; und
Bestimmen, ob eine Dauer der Pause größer oder gleich einer minimalen Pausendauer ist.

15. Verfahren nach Anspruch 14, ferner umfassend:
Verifizieren, dass die UUT (502) die Übertragung an die Begleitvorrichtung (550) nach der Pause wieder aufnimmt;
Veranlassen einer Drittvorrichtung, den Kanal während der Pause zu übernehmen;
Überwachen des Kanalverkehrs, während die Drittvorrichtung den Kanal übernommen hat; und
Verifizieren, dass die UUT (502) Übertragungen von der UUT (502) stoppt,
während die Drittvorrichtung den Kanal übernommen hat;
Identifizieren, wann die Drittvorrichtung den Kanal freigibt;
Überwachen des Kanalverkehrs, nachdem die Drittvorrichtung den Kanal freigibt; und
Bestimmen, dass die UUT (502) Übertragungen von der UUT (502) wieder aufnimmt, nachdem die Drittvorrichtung den Kanal freigibt.

## Revendications

1. Un appareil (520) pour vérifier l'efficacité d'une unité sous test, UUT (502), dans une condition de fonctionnement en opportunité de transmission, TxOP, l'appareil (520) comprenant :
une mémoire configurée pour stocker des données de canal provenant de la surveillance d'un premier canal ; et
une circuiterie de traitement couplée à la mémoire et configurée pour :
initier une configuration de l'UUT (502) à une durée TxOP maximale pour des transmissions à partir de l'UUT (502) connectée à un dispositif partenaire (550) via le premier canal (705) ;
initier une communication d'une commande de transmission à l'UUT (502) pour amener l'UUT (502) à réaliser une opération TxOP en utilisant la durée TxOP maximale (710) ;
surveiller une disponibilité de canal sur le premier canal entre l'UUT (502) et le dispositif partenaire (550) dans l'opération TxOP (715) ;
identifier une pause dans l'opération TxOP sur la base de la disponibilité de canal pour le premier canal (720) ; et
déterminer si une durée de la pause est supérieure ou égale à une durée de pause minimale (725).

2. L'appareil (520) selon la revendication 1, dans lequel la circuiterie de traitement est configurée en outre pour :
vérifier, sur la base de la surveillance de la disponibilité de canal, que l'UUT (502) reprend une transmission vers le dispositif partenaire (550) après la pause ; et
dans lequel la circuiterie de traitement est configurée pour identifier la pause dans l'opération TxOP en détectant une énergie de canal pour le premier canal au-dessous d'une valeur d'énergie de seuil ;
dans lequel l'UUT (502) est connectée au dispositif partenaire (550) via un vecteur d'attribution de réseau, NAV ; et
dans lequel la circuiterie de traitement est configurée en outre pour :
établir le NAV à une durée égale à une durée de l'opération TxOP plus une durée de la pause.

3. L'appareil (520) selon la revendication 1, dans lequel l'identification de la pause comprend une identification d'une période de temps contiguë durant laquelle l'UUT (502) interrompt une transmission au dispositif partenaire (550).

4. L'appareil selon la revendication 1, dans lequel l'UUT (502) est connectée au dispositif partenaire (550) via un canal physique conventionnel de contrôle de liaison descendante, cPDCCH ; et
dans lequel la circuiterie de traitement est configurée en outre pour :
planifier des transmissions de l'UUT (502) au dispositif partenaire (550) pour être transmises dans l'opération TxOP après la pause ; et
vérifier que les transmissions planifiées de l'UUT (502) au dispositif partenaire (550) sont transmises après la pause.

5. L'appareil (520) selon la revendication 1, dans lequel la circuiterie de traitement est configurée en outre pour :
traiter des données de balayage pour des transmissions de balayage transmises par l'UUT (502) après la pause pour des préambules de trame à partir de la surveillance du premier canal ; et
vérifier que les transmissions balayées excluent les préambules de trame.

6. L'appareil (520) selon la revendication 1, dans lequel la circuiterie de traitement est configurée en outre pour :
initier une transmission d'une prise en charge de canal durant la pause, dans lequel une durée de prise en charge est plus longue que la durée de la pause ;
surveiller un trafic de canal suite à l'initiation de la prise en charge de canal ; et
vérifier, à partir de la surveillance de trafic de canal, que l'UUT (502) interrompt des transmissions à partir de l'HUT durant la prise en charge de canal.

7. L'appareil (520) selon la revendication 6, dans lequel la circuiterie de traitement initie une transmission de la prise en charge de canal en communiquant avec un dispositif de tiers pour utiliser le premier canal durant la pause.

8. L'appareil (520) selon la revendication 6, dans lequel la circuiterie de traitement est configurée en outre pour :
identifier le moment où le dispositif de tiers libère le premier canal ;
surveiller le trafic de canal après que le dispositif de tiers libère le premier canal ; et
déterminer que l'UUT (502) reprend des transmissions à partir de l'UUT (502) après que le dispositif de tiers libère le premier canal.

9. L'appareil (520) selon la revendication 7, dans lequel le premier canal est associé à un NAV ; et
dans lequel le NAV est établi à une durée égale à une durée de l'opération TxOP plus une durée de la pause ; et
dans lequel la circuiterie de traitement est configurée en outre pour :
surveiller un trafic de canal pendant la durée du NAV ; et
déterminer que l'UUT (502) interrompt des transmissions à partir de l'UUT (502) après la pause jusqu'à une fin de la durée du NAV.

10. L'appareil (520) selon la revendication 7, dans lequel le premier canal est un canal physique conventionnel de contrôle de liaison descendante, cPDCCH, dans lequel des transmissions sont planifiées pour une trame associée à la TxOP ; et
dans lequel la circuiterie de traitement est configurée en outre pour :
surveiller le trafic de canal pendant la trame ; et
déterminer que l'UUT (502) interrompt des transmissions à partir de l'UUT (502) après la pause jusqu'à une fin de la trame.

11. L'appareil (520) selon une des revendications 1-10, dans lequel l'appareil (520) comprend un analyseur de spectre couplé à la circuiterie de traitement, l'analyseur de spectre étant configuré pour détecter des transmissions sur des fréquences associées au premier canal, générer un flux de données à partir de la détection des transmissions sur des fréquences associées au premier canal, et communiquer le flux de données à la circuiterie de traitement.

12. Un support de stockage lisible par calculateur comprenant des instructions qui, quand elles sont exécutées par une circuiterie de traitement d'un dispositif de test (520), amènent le dispositif à réaliser des opérations pour vérifier l'efficacité d'une unité sous test, UUT (50), dans une condition de fonctionnement en opportunité de transmission, TxOP, les instructions amenant le dispositif de test (520) à :
initier une configuration de l'UUT (502) à une durée TxOP maximale pour des transmissions à partir de l'UUT (502) connectée à un dispositif partenaire (550) via un premier canal ;
initier une communication d'une commande de transmission à l'UUT (502) pour amener l'UUT (502) à réaliser une opération TxOP en utilisant la durée TxOP maximale ;
surveiller une disponibilité de canal sur le premier canal entre l'UUT (502) et le dispositif partenaire (550) dans l'opération TxOP ;
identifier une pause dans l'opération TxOP sur la base de la disponibilité de canal pour le premier canal ; et
déterminer si une durée de la pause est supérieure ou égale à une durée de pause minimale.

13. Le support de stockage selon la revendication 12, dans lequel les instructions amènent en outre le dispositif (520) à :
initier une transmission d'une prise en charge de canal par un dispositif de tiers durant la pause, dans lequel une durée de prise en charge est plus longue que la durée de la pause ;
surveiller un trafic de canal suite à l'initiation de la prise en charge de canal ; et
vérifier, à partir de la surveillance de trafic de canal, que l'UUT (502) interrompt des transmissions à partir de l'UUT (502) durant la prise en charge de canal ;
identifier le moment où le dispositif de tiers libère le premier canal ;
surveiller le trafic de canal après que le dispositif de tiers libère le premier canal ; et
déterminer que l'UUT (502) reprend des transmissions à partir de l'UUT (502) après que le dispositif de tiers libère le premier canal.

14. Un procédé pour un appareil (520) pour vérifier l'efficacité d'une unité sous test, UUT (502), dans une condition de fonctionnement en opportunité de transmission, TxOP, le procédé comprenant les étapes suivantes :
la surveillance d'une disponibilité de canal d'un canal pour des transmissions entre l'UUT (502) et un dispositif partenaire (550) dans l'opération TxOP en utilisant des données reçues via une interface de communication comprise dans l'appareil (520) ;
l'identification d'une pause dans l'opération TxOP sur la base de la disponibilité de canal surveillée ; et
la détermination si une durée de la pause est supérieure ou égale à une durée de pause minimale.

15. Le procédé selon la revendication 14, comprenant en outre :
la vérification que l'UUT (502) reprend une transmission vers le dispositif partenaire (550) après la pause ;
l'action d'amener un dispositif de tiers de prendre en charge le canal durant la pause ;
la surveillance d'un trafic de canal alors que le dispositif partenaire a pris en charge le canal ; et
la vérification que l'UUT (502) interrompt des transmissions à partir de l'UUT (502) alors que le dispositif partenaire a pris en charge le canal ;
l'identification du moment où le dispositif de tiers libère le canal ;
la surveillance du trafic de canal après que le dispositif de tiers libère le canal ; et
la détermination que l'UUT (502) reprend des transmissions à partir de l'UUT (502) après que le dispositif de tiers libère le canal.
